# EUROPÄISCHE PATENTSCHRIFT

(11) **EP 2 058 193 B1**
(45) Veröffentlichungstag und Bekanntmachung des Hinweises auf die Patenterteilung: **16.03.2016**
(21) Anmeldenummer: 08019445.9
(22) Anmeldetag: 06.11.2008
(51) Int. Cl.: B60T 13/38, B60T 15/60, B60T 13/26

(54) **Manuell betätigbares Ventil für eine Bremsanlage eines Anhängers**
Manually activated valve for a braking system on a trailer
Soupape pouvant être entraînée manuellement pour une installation de frein d'une remorque

(30) Priorität: 12.11.2007 DE 102007053765
(43) Veröffentlichungstag der Anmeldung: 13.05.2009
(73) Patentinhaber: Haldex Brake Products GmbH, 69123 Heidelberg (DE)
(72) Erfinder: Sulzyc, Georg, 68305 Mannheim (DE)
(74) Vertreter: REHBERG HÜPPE + PARTNER

(56) Entgegenhaltungen:
- EP-B1- 0 792 783
- DE-A1- 1 942 066
- DE-A1- 3 743 711

## Beschreibung

### TECHNISCHES GEBIET DER ERFINDUNG

Die Erfindung betrifft ein manuell betätigbares Ventil für eine Bremsanlage eines Anhängers eines Kraftfahrzeuges, beispielsweise ein Parkventil.

### STAND DER TECHNIK

Für eine Bremsanlage kann zwischen einen Vorratsbehälter für die Feststellbremse und einen Federspeicherbremszylinder der Feststellbremse ein Handregelventil oder Parkventil zwischengeschaltet sein, über welches durch manuelle Betätigung die mit Federspeicherbremszylindern gebildete Feststellbremse aktiviert und deaktiviert werden kann. Reicht der in dem Vorratsbehälter vorliegende Druck nicht aus, um die Feststellbremse zu lösen, kann der Eindruck erweckt werden, dass sich das Handregelventil in einer Stellung befindet, in der die Feststellbremse aktiviert ist, obwohl dies tatsächlich nicht der Fall ist. Mit einer Aufladung der Bremsanlage, beispielsweise mit Start der Brennkraftmaschine, steigt der Druck in dem Vorratsbehälter an, was mit Erreichen des Lösedruckes für die Federspeicherbremszylinder ein automatisiertes, vom Fahrer nicht gewolltes Lösen der Federspeicherbremszylinder zur Folge hat. Schlimmstenfalls kann dies dazu führen, dass sich das Fahrzeug ungewollt in Bewegung setzt.

Zur Abhilfe sind aus der Druckschrift DE 36 30 892 C2 sowie den Dokumentationen

WABCO WESTINGHOUSE, Aus unserer Entwicklung 1971, S. 15 und
Saab-Scania AB, Technische Dokumentation 10-86 10 02 GT TY, Sperrventil: Funktionsbeschreibung

Sperrventile bekannt, über die ein automatisches Lösen der Feststellbremse während der Aufladung der Bremsanlage verhindert werden soll, wenn sich ein Handregelventil in gelöster Lage befindet. Das Sperrventil von SCANIA besitzt ein Ventilelement, welches in einem Endbereich starr mit einem als Betätigungsknopf ausgebildeten Betätigungsorgan verbunden ist sowie in dem gegenüberliegenden Endbereich mit einem Ventilkörper. Der Ventilkörper bildet mit dem Gehäuse des Sperrventils ein Sitzventil, welches in einer Öffnungsstellung einen mit dem Vorratsbehälter verbundenen Anschluss des Sperrventils mit einem mit der Feststellbremse, hier der Federspeicherbremszylinder, verbundenen Anschluss verbindet, während die vorgenannte Verbindung in einer Schließstellung unterbrochen ist. Eine Druckfeder ist in einem Endbereich gegenüber dem Gehäuse abgestützt, während diese in dem gegenüberliegenden Endbereich den Ventilkörper in eine Öffnungsstellung beaufschlagt. Eine Druckstange des Ventilelementes besitzt eine Einschnürung, die mit einer elastischen Dichtlippe des Gehäuses des Sperrventils derart zusammenwirkt, dass zwischen der Dichtlippe und der Einschnürung in der Schließstellung des Ventilkörpers der mit dem Federspeicherbremszylinder verbundene Anschluss des Sperrventils mit einem Entlüftungsanschluss verbunden ist, während in der Öffnungsstellung des Ventilkörpers das Dichtelement unter Abdichtung zur Anlage an die Druckstange kommt, so dass die vorgenannte Entlüftungsverbindung geschlossen ist. Fluchtend zur Druckstange ist ein Betätigungskolben angeordnet, welcher über eine Betätigungsfeder abgestützt ist und auf den der Druck an dem Anschluss für den Vorratsbehälter wirkt. Für geringen Druck an dem Anschluss für den Vorratsbehälter drückt die Betätigungsfeder den Betätigungskolben gegen den Ventilkörper des Ventilelementes, so dass dieser in seine Schließstellung beaufschlagt ist. Mit einem Anstieg des Druckes in dem mit dem Vorratsbehälter verbundenen Anschluss wird der Betätigungskolben von dem Ventilkörper getrennt, wobei der vorgenannte Druck dafür Sorge trägt, dass der Ventilkörper in seiner Schließstellung bleibt. Eine Verbindung des Vorratsbehälters mit dem Federspeicherbremszylinder kann über das Sperrventil durch manuelle Betätigung des Betätigungsknopfes erfolgen, welche den Ventilkörper in Richtung des beabstandeten Betätigungskolbens verschiebt, bis der Ventilkörper an dem Betätigungskolben zur Anlage kommt. In dieser Stellung ist eine Öffnungsstellung gegeben mit einer Verbindung des Anschlusses, der mit dem Vorratsbehälter verbunden ist, mit dem Anschluss, der mit dem Federspeicherbremszylinder verbunden ist. Sinkt allerdings der Druck in dem Feststellbremskreis, insbesondere in dem Vorratsbehälter, unter einen Einstellwert des Sperrventils, presst die Betätigungsfeder über den Betätigungskolben den Ventilkörper gegen dessen Sitz, wodurch die Verbindung zwischen dem Anschluss, der mit dem Vorratsbehälter verbunden ist, und dem Anschluss, der mit dem Federspeicherbremszylinder verbunden ist, geschlossen wird. Gleichzeitig wird die Entlüftungsverbindung geschaffen. Entsprechendes gilt für die Sperrventile gemäß den anderen eingangs erwähnten Druckschriften.

Aus EP 0 792 783 B1 ist das Problem bekannt, dass bei einer Bremsanlage eines Anhängers eines Kraftfahrzeuges eine Verringerung oder ein Entfall eines Druckes in einer Vorratsleitung auftreten kann, der insbesondere
- durch ein Abkoppeln der Vorratsleitung,
- eine Leckage im Vorratsleitungsstrang,
- einen Abriss einer Vorratsleitung,
- einen Druckeinbruch in dem Zugfahrzeug
- oder einen Unfall
verursacht sein kann. Gemäß dem in EP 0 792 783 B1 dargestellten Ausführungsbeispiel wird in einem derartigen Fall eine Notbremsung ausgelöst, indem automatisiert Betriebsbremszylinder des Anhängers beaufschlagt werden. Folge einer derartigen Notbremsung ist, dass der Anhänger auch anschließend im Stillstand durch die Betriebsbremszylinder gebremst ist. Um eine gesicherte Parkstellung zu gewährleisten, ist in bekannten Bremsanlagen üblicherweise ein Parkventil vorgesehen, welches für eine Parksituation manuell in eine Entlüftungsstellung verbracht werden muss, in welcher eine Entlüftung eines Federspeicherbremszylinders erfolgt. Da allerdings über eine Notbremsfunktion bereits die Betriebsbremszylinder druckbeaufschlagt sein können, ist es in der Vergangenheit wiederholt dazu gekommen, dass der Fahrer vergisst, die Entlüftungsstellung des Parkventils manuell herbeizuführen. Dies hat aber zur Folge, dass mit erneutem Einwirken des Vorratsleitungsdruckes infolge eines erneuten Ankoppelns der Vorratsleitung an ein Zugfahrzeug die Notbremsfunktion aufgehoben wird, was eine Entlüftung der Betriebsbremszylinder zur Folge hat. In diesem Zustand ist der Anhänger ohne gebotene vorherige manuelle Betätigung des Parkventils ungebremst, was eine Gefahrensituation herbeiführen kann, die schlimmstenfalls tödlich für den Fahrer sein kann.

Zur Vermeidung dieser Gefahrensituation schlägt EP 0 792 783 B1 ein modifiziertes Parkventil für eine Bremsanlage eines Anhängers vor, welches eine in an sich bekannter Weise ausgebildete Steuereinheit besitzt, in der ein Ventilelement, hier ein Ventilschieber, in einer Entlüftungsstellung eine zu den Federspeicherbremszylindern führende Leitung entlüftet und in einer Belüftungsstellung eine Belüftung der Federspeicherbremszylinder ermöglicht. Eine Betätigungsfeder beaufschlagt das Ventilelement derart, dass sich dieses in entspanntem Zustand in der Entlüftungsstellung befindet, während die Beaufschlagung der Betätigungsfeder in Richtung der Belüftungsstellung zunimmt. Zur automatischen Herbeiführung einer Parkstellung schlägt die Druckschrift eine automatische Betätigungseinheit vor, die dafür Sorge trägt, dass für ausreichenden Druck in der Vorratsleitung unter Beaufschlagung der Betätigungsfeder das Ventilelement in der Belüftungsstellung ist, in welcher der Federspeicherbremszylinder belüftet ist. Hierzu besitzt die Betätigungseinheit einen Betätigungskolben, der vom Druck in der Vorratsleitung beaufschlagt ist. Der druckbeaufschlagte Betätigungskolben erzeugt eine Kraft, die für anliegenden Druck in der Vorratsleitung entgegen der Wirkung der Betätigungsfeder das Ventilelement in der Belüftungsstellung hält. Mit Entlüftung der Vorratsleitung entfällt diese Kraft, so dass die Betätigungsfeder über den Betätigungskolben das Ventilelement in die Entlüftungsstellung bringt, in der der Federspeicherbremszylinder automatisch entlüftet wird. Dieses ist sowohl in einer Notbremssituation der Fall als auch für ein Abstellen des Anhängers mit Abkoppeln der Vorratsleitung. Mit Eintritt einer Notbremssituation wird eine maximale Bremswirkung erzielt, welche ein Blockieren der Räder des Anhängers zur Folge hat.

Kurz zusammengefasst basiert EP 0 792 783 B1 somit auf dem Grundgedanken, neben einem Anhängerbremsventil mit Notbremsfunktion auch das Parkventil mit einer zusätzlichen "Notbremsfunktion" auszustatten, welche zur Folge hat, dass das Parkventil mit Einbruch des Druckes in der Vorratsleitung - sei es in einem Notfall oder in einer echten Parksituation - automatisiert in eine Park- oder Entlüftungsstellung verbracht wird.

EP 0 792 783 B1 ist darüber hinaus zu entnehmen, dass in einer Notbremssituation eine Addition der Kräfte des Betriebsbremszylinders und des Federspeicherbremszylinders bei gleichzeitiger Belüftung des Betriebsbremszylinders und Entlüftung des Federspeicherbremszylinders infolge der Entlüftung über das Parkventil in der Entlüftungsstellung dadurch vermieden werden kann, dass ein Wechselventil vorgesehen ist. Der Ausgang dieses Wechselventils ist (hier über ein Schnelllöseventil) mit dem Federspeicherbremszylinder verbunden, während ein erster Eingang des Wechselventils mit dem Parkventil und ein zweiter Eingang des Wechselventils mit dem Betriebsbremszylinder bzw. einem Relaisventil, welches der Erzeugung eines Bremsdruckes für den Betriebsbremszylinder dient, verbunden ist. Durch den Einsatz des Wechselventils wird in einer Notbremssituation, in welcher das Parkventil automatisch in die Entlüftungsstellung gebracht wird, infolge des höheren an dem Betriebsbremszylinder anliegenden Druckes der Federspeicherbremszylinder nicht entlüftet, sondern mit dem Betriebsbremsdruck beaufschlagt, so dass die Entlüftung des Federspeicherbremszylinders (zumindest teilweise) verhindert ist.

Für die aus EP 0 792 783 B1 bekannte Betätigungseinheit ist der Betätigungskolben starr mit dem Ventilelement und dem Betätigungsorgan gekoppelt. In der Belüftungsstellung ist der Betätigungskolben unter radialer Abdichtung eines in einer radialen Nut des Betätigungskolbens angeordneten Dichtelementes in einer passenden Bohrung des Gehäuses des Ventils angeordnet, so dass der Druck in der Vorratsleitung auf den Betätigungskolben wirken kann. Bricht hingegen der Druck in der Vorratsleitung ein und damit die von dem Druck auf den Betätigungskolben bewirkte Kraft, verschiebt die Betätigungsfeder den Kolben - und hiermit auch das Ventilelement und das Betätigungsorgan - in einen erweiterten Bohrungsbereich des Gehäuses, in welchem der Kolben mit dem Dichtelement einen radialen Ringspalt mit dem Gehäuse ausbildet. In diesem Stellbereich des Ventilelementes bildet der genannte Ringspalt eine Verbindung zwischen einer Entlüftung und dem mit der Vorratsleitung verbundenen Anschluss.

### AUFGABE DER ERFINDUNG

Der Erfindung liegt die Aufgabe zugrunde, ein verändertes Ventil für eine Bremsanlage eines Anhängers vorzuschlagen, welches automatisiert einen Abfall eines Druckes in einer Vorratsleitung, beispielsweise infolge eines Abrisses der Vorratsleitung, berücksichtigt. Insbesondere soll das modifizierte Ventil
- eine vereinfachte bauliche Gestaltung ermöglichen,
- die Zahl der beteiligten Ventilelemente reduzieren und/oder
- die Betätigungscharakteristik des Ventils bei manueller Betätigung verbessern.

### LÖSUNG

Die Aufgabe der Erfindung wird erfindungsgemäß mit den Merkmalen des unabhängigen Patentanspruchs 1 gelöst. Weitere Ausgestaltungen eines erfindungsgemäßen Ventils ergeben sich entsprechend den abhängigen Patentansprüchen 2 bis 17.

### BESCHREIBUNG DER ERFINDUNG

Der vorliegenden Erfindung liegt zunächst eine ausführliche Analyse und technische Bewertung des einschlägigen Standes der Technik zugrunde:
Hierbei hat die Erfindung zunächst erkannt, dass problematisch für die aus EP 0 792 783 B1 bekannte Ausführungsform die radiale Abdichtung des Betätigungskolbens ist. Diese erfordert zunächst eine präzise Herstellung der beteiligten Bauelemente, insbesondere der radialen Abmessungen des Betätigungskolbens, der Aufnahmebohrung im Bereich der Schließstellung und des Fluchtens der Bohrung zur Führung der Druckstange, der zylinderförmigen Mantelflächen des Betätigungskolbens und der Bohrungen des Gehäuses zur Aufnahme des Betätigungskolbens. Andererseits erfordert der Betrieb des aus EP 0 792 783 B1 bekannten Ventils ein wiederholtes Überfahren einer Durchmesserveränderung der Aufnahmebohrung des Gehäuses durch den Betätigungskolben mit dem Dichtelement. Dies hat eine verstärkte Beanspruchung insbesondere des Dichtelementes zur Folge, wobei unerwünschte Verformungen des Dichtelementes oder ein Verschleiß desselben eine Undichtigkeit zur Folge haben, welche im einfachsten Fall zu einem erhöhten Druckluftverbrauch des Anhängers führt und schlimmstenfalls trotz ausreichendem Druck in der Vorratsleitung zu einer Entlüftung derselben führt, was mit einer unnötigen Notbremsung des Anhängers verbunden sein kann.

Weiterhin hat die Erfindung erkannt, dass eine Betätigung des Ventilelementes gemäß EP 0 792 783 B1 zwingend unter Veränderung der Beaufschlagung der Betätigungsfeder erfolgt, so dass für eine manuelle Bewegung des Ventilelementes von einer Entlüftungsstellung in eine Belüftungsstellung von dem Benutzer gegen die Betätigungsfeder gearbeitet werden muss, was eine Aufbringung erhöhter Betätigungskräfte zur Folge hat und - je nach Abstützung der Betätigungsfeder - eine "hakelige" Betätigung zur Folge haben kann.

### Andererseits ist die Betätigungsfeder gleichzeitig

- für die Herbeiführung der Notbremsung erforderlich und
- zur Vorgabe eines Schwellwertes für den Druck in der Vorratsleitung, unterhalb dessen eine automatisierte Überführung in die Entlüftungsstellung erfolgt.

Damit unterliegt die Auslegung der Betätigungsfeder dem Zielkonflikt, einerseits die Kräfte für die Betätigung in einem gut handhabbaren Bereich zu halten und andererseits die Notbremsfunktion zuverlässig zu gewährleisten.

Weiterhin berücksichtigt die Erfindung Merkmale eines Ventils gemäß dem Stand der Technik, welches eigentlich einem anderen technologischen Feld zugeordnet ist, nämlich einer Bremsanlage für ein Zugfahrzeug:
Aus DE-OS 1 942 066 ist ein als halbautomatischer Schalter benanntes automatisiertes Entlüftungsventil bekannt, welches bei einem Zugfahrzeug zwischen eine Federspeicherbremse und ein Handbremsventil sowie einen Vorratsbehälter zwischengeschaltet ist. In diesem Sperrventil sind drei Bauelemente relativ zueinander verschieblich angeordnet, nämlich
   - eine in einem Endbereich mit einem Betätigungsknopf sowie im gegenüberliegenden Endbereich mit einem Ventilkörper starr verbundene Druckstange,
   - ein weiterer Ventilkörper, der mit dem druckstangenfesten Ventilkörper ein Entlüftungsventil bildet, über welches der mit der Federspeicherbremse verbundene Anschluss mit einem Entlüftungsanschluss des Sperrventils verbindbar ist, sowie mit dem Gehäuse des Sperrventils ein Be- und Entlüftungsventil bildet, über welchen die Federspeicherbremse mit dem Handbremsventil verbindbar ist, und
   - einen Betätigungskolben, welcher verschieblich gegenüber dem weiteren Ventilkörper gelagert ist.

Der Betätigungskolben ist über eine Betätigungsfeder abgestützt, wobei der Betätigungskolben bei Druckbeaufschlagung aus dem Vorratsbehälter in eine obere Endstellung verbracht wird. Der Betätigungskolben besitzt Fortsätze, welche einen Absatz der Druckstange derart umgreifen, dass bei einer Bewegung des Betätigungskolbens bei einem Druckabfall in der Vorratsleitung der Betätigungskolben in eine Entlüftungsstellung gebracht wird. Hierbei nimmt der Betätigungskolben die Druckstange mit dem zugeordneten Ventilkörper mit, so dass das Entlüftungsventil in seine Öffnungsstellung gebracht wird, während über eine weitere Feder, über die das weitere Ventilelement gegenüber dem Gehäuse abgestützt ist, das Be- und Entlüftungsventil geschlossen ist. Für an dem Betätigungskolben anliegendem ausreichendem Druck des Vorratsbehälters kann manuell die Öffnungs- oder Schließstellung des Entlüftungsventils herbeigeführt werden, welche mit einer Schließstellung oder Öffnungsstellung des Be-und Entlüftungsventils korreliert.

Die der Erfindung zugrundeliegenden Untersuchungen haben zu dem Ergebnis geführt, dass nachteilig bei dem aus DE-OS 1 942 066 bekannten Sperrventil ist, dass auch für dieses Sperrventil eine manuelle Betätigung, zumindest über einen Teilweg, unter Veränderung einer Beaufschlagung einer Feder erfolgt, welche die Haptik und die Betätigungscharakteristik beeinträchtigen kann und einem Zielkonflikt einerseits für die manuelle Betätigung und andererseits für die Auslegung der Öffnungs- und Schließcharakteristik des Sperrventils unterliegt. Andererseits besitzt das Sperrventil einen verhältnismäßig komplizierten Aufbau durch die genannten drei relativ zueinander verschieblichen, aber koaxial zueinander angeordneten Bauelemente. Weiterhin ist für ein Halten des Sperrventils in geöffnetem Zustand des Be- und Entlüftungsventils trotz Beaufschlagung einer Feder des weiteren Ventilkörpers eine Rasteinrichtung erforderlich, die zusätzlichen Bauaufwand darstellt und die Betätigungscharakteristik des Sperrventils weiter beeinflusst. Schließlich offenbart die Druckschrift den Einsatz des Sperrventils für ein Zugfahrzeug mit einer reinen Federspeicherbremse für eine Handbremsfunktion, was sich in der unmittelbaren Verbindung des Ausgangsanschlusses des Sperrventils mit dem Federspeicherbremszylinder, einer Entlüftung, einer redundanten Entlüftungsmöglichkeit über den mit dem Handbremsventil verbundenen Be- und Entlüftungsanschluss und einem zusätzlichen Anschluss für eine Verbindung mit einem Vorratsbehälter äußert.

Unter Berücksichtigung dieser kumulierten Erkenntnisse schlägt die Erfindung gemäß einem ersten Lösungsgedanken vor, den Betätigungskolben und das Ventilelement als separate Bauelemente auszubilden, die relativ zueinander bewegbar sind und unmittelbar gegeneinander abgestützt, gleitend geführt oder abgedichtet sind. Somit entfällt erfindungsgemäß die starre Kopplung gemäß den bekannten Ausführungsformen der Unternehmen WABCO und SCANIA sowie entsprechend EP 0 792 783 B1. Andererseits ist eine komplizierte konstruktive Gestaltung entsprechend DE-OS 1 942 066 vermieden, für die der Betätigungskolben über den weiteren Ventilkörper abzustützen bzw. abzudichten war. Zwischen dem Betätigungskolben und dem Ventilelement wirkt ein Koppelelement, welches einerseits für gewünschte Betriebsbereiche eine Relativbewegung zulässt und andererseits in anderen Betriebsbereichen eine Kopplung zwischen Betätigungskolben und Ventilelement darstellt. Hierbei wirkt das Koppelelement bei erfindungsgemäßer Ausgestaltung nur in eine Richtung, nämlich von der Belüftungsstellung in Richtung der Entlüftungsstellung.

Für einen alternativen oder kumulativen zweiten Vorschlag der Erfindung besitzt das Ventilelement eine Belüftungsstellung und eine Entlüftungsstellung. Für vorhandenen ausreichenden Druck in der Vorratsleitung ist das Ventilelement manuell zwischen der Belüftungsstellung und der Entlüftungsstellung bewegbar, wobei eine derartige Bewegung (zumindest in Teilbetriebsbereichen) nicht mit einer Veränderung einer Beaufschlagung einer Feder verbunden ist, die an einer Öffnung oder Schließung einer Druckluftverbindung des Ventils beteiligt ist oder für diese verantwortlich ist. Auf diese Weise kann der zuvor erläuterte Zielkonflikt beseitigt werden, so dass Federcharakteristika für die Feder, die an einer Öffnung oder Schließung der Druckmittelverbindungen des Ventils beteiligt sind, frei gestaltet werden können, was letztlich eine Erhöhung der Betriebssicherheit des Ventils bedeuten kann.

Während durchaus möglich ist, dass für vorhandenen ausreichenden Druck in der Vorratsleitung eine manuelle Verschiebung des Ventilelements ohne jedwede Beaufschlagung einer Feder möglich ist, so dass eine besonders leichte Betätigung ermöglicht ist, kann ebenfalls eine zusätzliche Feder in dem Ventil vorgesehen sein, die nicht an einer Öffnung oder Schließung einer Druckluftverbindung des Ventils beteiligt ist, sondern die lediglich einer Beeinflussung der Betätigungscharakteristik für die manuelle Betätigung dient.

Gemäß einem weiteren Vorschlag der Erfindung kann der Betätigungskolben eine Ausnehmung, beispielsweise eine zentrale Bohrung, besitzen, durch die sich das Ventilelement oder ein mit dem Ventilelement gekoppeltes Antriebselement erstreckt. Zwischen Ventilelement bzw. Antriebselement und Betätigungskolben kann dann im Bereich der Ausnehmung eine Abstützung, Führung und/oder Abdichtung erfolgen, wobei eine Material sparende, Gewicht sparende und kompakte Ausgestaltung gegeben sein kann.

Während eine beliebige Wirkung des Koppelelements grundsätzlich möglich ist, beispielsweise eine elektromagnetische Kopplung, eine reibschlüssige Kopplung oder ähnliches, ist eine besonders zuverlässige Ausgestaltung des Ventils gegeben, wenn das Koppelelement einseitig formschlüssig wirkt. Hierzu kann beispielsweise das Koppelelement als Absatz des Ventilelements oder des mit dem Ventilelement gekoppelten Antriebselements ausgebildet sein. Während dieser Absatz beispielsweise als Wellenabsatz, als Fortsatz, Vorsprung oder ähnliches ausgebildet sein kann, ist eine besonders einfache Fertigung unter Vergrößerung der Montagemöglichkeiten gegeben, wenn der Absatz mit einem Sicherungsring ausgebildet ist, welcher beispielsweise in eine geeignete Nut des Ventilelementes oder des Antriebselementes einklipsbar ist.

Andererseits kann eine besonders einfache einseitig wirkende Kopplung zwischen Ventilelement oder einem mit dem Ventilelement gekoppelten Antriebselement mit dem Betätigungskolben auch derart erfolgen, dass das Ventilelement oder das Antriebselement mit einer Stirnseite an dem Betätigungskolben anliegt. Eine entkoppelte Bewegung kann somit dann erfolgen, wenn die Stirnseite des Ventilelementes oder Antriebselementes einen veränderbaren Abstand zu dem Betätigungskolben aufweist. In diesem Fall muss der Betätigungskolben nicht zwingend mit einer Ausnehmung ausgebildet sein, so dass unter Umständen auch Dichtelemente und/oder Führungselemente zwischen Ventilelement bzw. Antriebselement und Betätigungskolben entbehrlich sind.

Für ein weiteres erfindungsgemäßes Ventil ist der Betätigungskolben als gestufter Kolben ausgebildet, der in einer entsprechend gestuften Bohrung des Gehäuses aufgenommen ist. Durch die Stufung kann Einfluss genommen werden auf die erforderlichen Füllvolumina für einen dem Betätigungskolben zugeordneten Druckraum bzw. den einzelnen Teilflächen des gestuften Kolbens zugeordnete mehrere Druckräume. Weiterhin kann eine Beeinflussung der Betätigungsgeschwindigkeit für die Betätigungseinheit durch die Stufung(en) des Betätigungskolbens und der zugeordneten gestuften Bohrung erfolgen.

Während durchaus möglich ist, dass einzelne Teilflächen des gestuften Betätigungskolbens gleichzeitig mit dem Druck der Vorratsleitung bzw. einem Druckabfall beaufschlagt werden, ist es ebenfalls möglich, dass einzelne Teilflächen des gestuften Kolbens unterschiedlich und/oder zeitlich versetzt beaufschlagt werden. Für eine besondere Ausgestaltungsform erfolgt eine Druckbeaufschlagung von Teilflächen des Betätigungskolbens bewegungsgesteuert derart, dass zunächst in einem ersten Betätigungsweg lediglich eine erste Kolbenfläche des Betätigungskolbens dem Druck in der Vorratsleitung ausgesetzt ist, während für einen anschließenden zweiten Betätigungsweg zusätzlich zu der ersten Kolbenfläche eine zweite Kolbenfläche des Betätigungskolbens dem Druck in der Vorratsleitung ausgesetzt ist. Über eine derartige "Bewegungssteuerung" ist eine weitere Beeinflussungsmöglichkeit für die Bewegungscharakteristik und Kraftcharakteristik der Betätigungseinheit gegeben.

Beispielsweise kann eine derartige Bewegungssteuerung unter Einsatz eines Verbindungskanals erfolgen, welcher einen einer ersten Kolbenfläche zugeordneten ersten Druckraum mit einem einer zweiten Kolbenfläche zugeordneten Druckraum verbindet, wobei der Verbindungskanal insbesondere dann geöffnet wird, wenn ein Teilbereich oder eine Steuerkante des Betätigungskolbens eine Steuernut oder Öffnung des Verbindungskanals überfährt.

Die Erfindung kann für ein beliebiges Ventil Einsatz finden, solange dies Einsatz findet in einem Anhänger eines Kraft- oder Nutzfahrzeuges, insbesondere für ein Löseventil oder ein Parkventil oder ein Anhängerbremsventil. Für den Fall, dass das Ventil als Parkventil ausgebildet ist, kann in dieses mindestens ein weiteres pneumatisches Bauelement integriert sein. Beispielsweise ist in das Ventil ein Wechselventil integriert, von dem
- ein erster Eingang in der Entlüftungsstellung entlüftet ist,
- ein zweiter Eingang mit einem Betriebsbremssteuerdruck beaufschlagt ist, welcher auch einer Regeleinrichtung für einen Betriebsbremszylinder zugeführt ist, und
- ein Ausgang mit einem Federspeicherbremszylinder verbunden ist.

Hierbei ist insbesondere der Ausgang unter Zwischenschaltung eines weiteren Wechselventils mit einem Federspeicherbremszylinder verbunden. Diese Ausgestaltung der Erfindung hat insbesondere Vorteile, wenn in einer Notbremssituation eine Abbremsung des Anhängers unter Nutzung einer ABS-Funktion erfolgen soll und/oder eine Regeleinrichtung genutzt wird, die eine Baueinheit bildet mit einem Wechselventil, welches zusätzlich zu dem in das erfindungsgemäße Ventil integrierten Wechselventil vorgesehen ist.

Entsprechend einem weiteren Vorschlag ist das erfindungsgemäße Ventil - abweichend zu dem Ventil gemäß DE-OS 1 942 066 - in Schieberbauweise ausgebildet.

Gemäß einem weiteren Vorschlag ist das Ventil mit einer Verriegelungseinheit ausgebildet. Mittels der Verriegelungseinheit kann der Betätigungskolben verriegelt werden. Hierbei kann eine Betätigung der Verriegelungseinheit mechanisch, pneumatisch, elektrisch, elektropneumatisch und/oder elektromagnetisch erfolgen. Beispielsweise kann hierfür ein elektrisches Steuersignal einer Steuereinheit verwendet werden, bei welcher es sich auch um eine ABS-oder EBS-Regeleinheit handeln kann.

Beispielsweise kann über die Verriegelungseinheit dann eine Verriegelung des Betätigungskolbens erfolgen, wenn eine Notbremssituation gegeben ist und gleichzeitig, zumindest für einen gewissen Zeitraum, eine Notbremsung des Anhängers über eine ABS- oder EBS-Regeleinheit erfolgt, welche mit einem Betriebsbremszylinder zusammenwirkt. Würde in einer derartigen Situation zusätzlich über die Betätigungseinheit der Federspeicherbremszylinder entlüftet werden, käme es zu einer Bremskraftaddition, die zu einer fehlerhaften ABS-Regelung führen könnte. In einem derartigen Fall kann die Verriegelungseinheit trotz Abfalls des Drucks in der Vorratsleitung die Betätigungseinheit "blockieren", indem der Betätigungskolben festgesetzt wird. Andererseits kann der Betätigungskolben von der Verriegelungseinheit freigegeben werden in einer echten Parksituation, wenn der Druck in der Vorratsleitung abfällt und beispielsweise die Geschwindigkeit des Anhängers 0 oder kleiner einer Schwellgeschwindigkeit ist, was von Raddrehzahlsensoren oder der ABS-Steuereinheit erkannt werden kann, oder wenn ein Behälterdruck, welcher für eine ABS-Notbremsung verwertet wird, nicht ausreichend befüllt ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig.1**: zeigt eine Integration eines erfindungsgemäßen Ventils in eine Bremsanlage eines Anhängers in schematischer Darstellung,
- **Fig. 2**: zeigt eine detailliertere Ausgestaltung einer Bremsanlage gemäß Fig. 1 mit einem erfindungsgemäßen Ventil in schematischer Darstellung,
- **Fig. 3**: zeigt ein Anhängerbremsventil der Bremsanlage gemäß Fig. 2 in vergrößerter schematischer Darstellung,
- **Fig. 4**: zeigt das erfindungsgemäße Ventil der in Fig. 2 dargestellten Bremsanlage in vergrößerter schematischer Darstellung,
- **Fig. 5**: zeigt eine modifizierte Ausgestaltung einer Bremsanlage mit einem erfindungsgemäßen Ventil in schematischer Darstellung, wobei die Bremsanlage eine Baueinheit aufweist, die mit einer Regeleinrichtung und einem Wechselventil gebildet ist,
- **Fig. 6**: zeigt eine weitere Ausgestaltung einer Bremsanlage mit einem erfindungsgemäßen Ventil, einer Baueinheit mit Regeleinrichtung und Wechselventil und einem weiteren Wechselventil in schematischer Darstellung,
- **Fig. 7**: zeigt eine weitere Ausgestaltung einer Bremsanlage mit einem erfindungsgemäßen Ventil, in welches ein Wechselventil integriert ist, und einer Baueinheit mit einer Regeleinrichtung und einem Wechselventil in schematischer Darstellung,
- **Fig. 8**: zeigt eine weitere Bremsanlage mit einem weiteren erfindungsgemäßen Ventil, welches eine Verriegelungseinrichtung besitzt, und einer mit einer Regeleinrichtung und einem Wechselventil gebildeten Baueinheit in schematischer Darstellung,
- **Fig. 9**: zeigt eine weitere Bremsanlage mit einem weiteren erfindungsgemäßen Ventil in schematischer Darstellung,
- **Fig. 10**: zeigt eine weitere Bremsanlage mit einem weiteren erfindungsgemäßen Ventil in schematischer Darstellung, wobei das Ventil für anliegenden und ausreichenden Druck in einer Vorratsleitung und entlüfteten Federspeicherbremszylinder dargestellt ist,
- **Fig. 11**: zeigt die Bremsanlage und das Ventil gemäß Fig. 10 für anliegenden Druck in der Vorratsleitung und belüfteten Federspeicherbremszylinder und
- **Fig. 12**: zeigt die Bremsanlage und das Ventil gemäß Fig. 10 und 11, wobei das Ventil für abgefallenen Druck in der Vorratsleitung und hierdurch automatisiert entlüfteten Federspeicherbremszylinder dargestellt ist.

### FIGURENBESCHREIBUNG

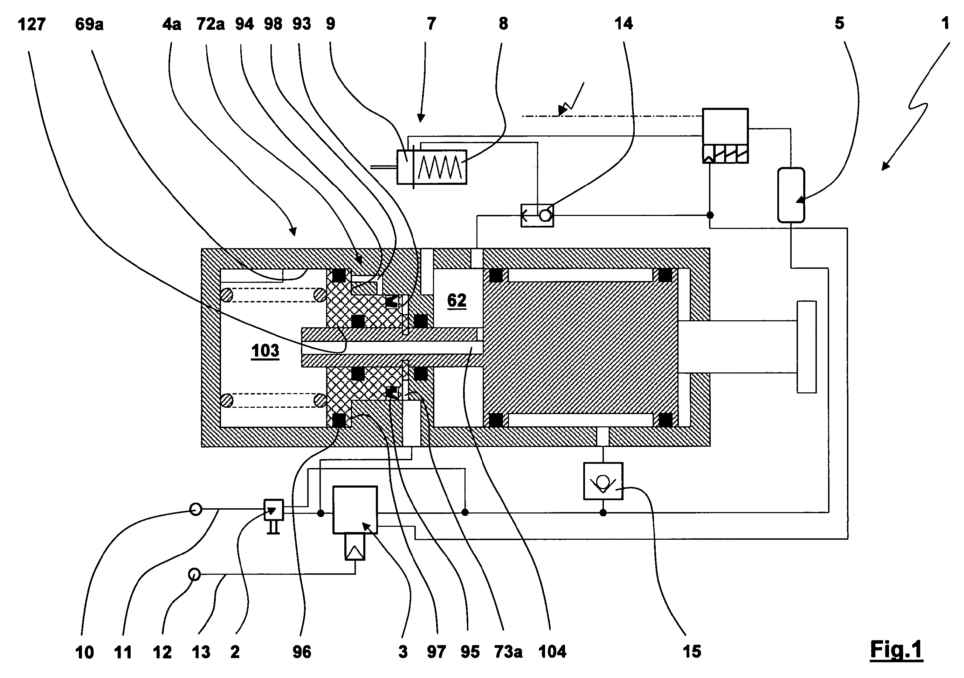

**Fig. 1** zeigt eine Bremsanlage 1 eines Anhängers, die in an sich bekannter Weise mit einem Löseventil 2, einem Anhängerbremsventil 3 oder einem Relaisventil, einem manuell betätigbaren Ventil 4 (hier ein "Parkventil"), einem Vorratsbehälter 5, einer Regeleinrichtung 6, insbesondere eine ABS-Einheit, eine EBS-Einheit und/oder eine ALB-Einheit, und einem Kombi-Bremszylinder 7 mit einem Federspeicherbremszylinder 8 und einem Betriebsbremszylinder 9 ausgestaltet ist. Der Bremsanlage 1 wird über einen Kupplungskopf Vorrat 10 Vorratsdruck eines Zugfahrzeuges zu einer Vorratsleitung 11 zugeführt, die über das Löseventil 2, welches manuell betätigbar ist, mit dem Vorratsbehälter 5 verbunden ist. Über eine Kupplungskopf Bremse 12 erfolgt eine Übergabe eines Bremssteuerdruckes von dem Zugfahrzeug zu einer Bremssteuerleitung 13, die mit einem Steueranschluss des Anhängerbremsventils 3 verbunden ist. Unter Einsatz eines Wechselventils 14 sowie eines Rückschlagventils 15 sind die genannten pneumatischen Bauelemente wie in Fig. 1 dargestellt in an sich bekannter Weise pneumatisch miteinander verbunden, wobei das hier dargestellte Ventil 4 nicht dem Stand der Technik entspricht, was im Folgenden noch näher erläutert wird.

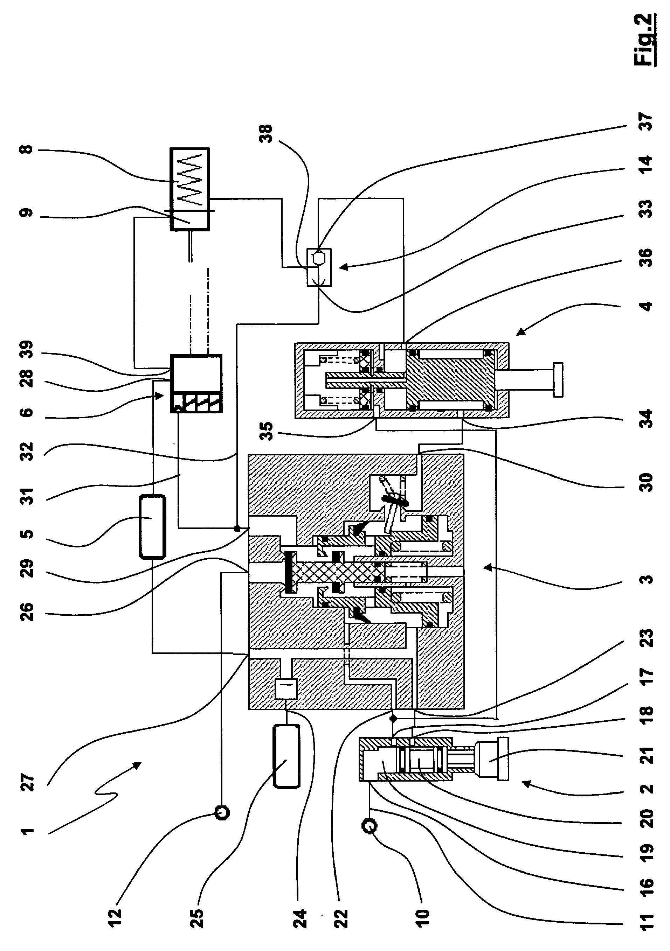

**Fig. 2** zeigt schematisch eine Bremsanlage 1 in erhöhtem Detaillierungsgrad. Das Löseventil 2 besitzt einen Anschluss 16, der mit der Vorratsleitung 11 verbunden ist, sowie zwei Anschlüsse 17, 18. Das Löseventil 2 besitzt zwei Stellungen. In der in Fig. 2 dargestellten ersten Stellung ist der Anschluss 16 mit dem Anschluss 17 verbunden, während der Anschluss 18 gesperrt ist. In einer zweiten Stellung ist die Verbindung zwischen Anschluss 16 und den Anschlüssen 17, 18 gesperrt, während die Anschlüsse 17, 18 miteinander verbunden sind. Hierzu besitzt das Löseventil 2 einen mit dem Druck der Vorratsleitung 11 beaufschlagten Druckraum 19. Der Druckraum 19 ist begrenzt durch eine Stirnseite eines Steuerschiebers 20. Der Steuerschieber besitzt zwei Steuerkanten mit einem dazwischen angeordneten Ringraum. In der ersten Stellung des Löseventils 2 sperrt die dem Druckraum 19 zugewandte Steuerkante die Verbindung zwischen den Anschlüssen 17, 18, während diese Steuerkante in der zweiten Stellung die Verbindung zwischen Anschluss 16 und den Anschlüssen 17, 18 sperrt, während der Ringraum eine Verbindung zwischen den Anschlüssen 17, 18 schafft. Für eine Druckbeaufschlagung der Vorratsleitung 11 befindet sich das Löseventil 2 infolge der auf die Stirnfläche des Steuerschiebers 20 einwirkenden Drucks der Vorratsleitung in der in Fig. 2 dargestellten ersten Stellung, während ohne Druck in der Vorratsleitung 11 die erste und zweite Stellung des Löseventils 2 stabil sind und die Stellung des Löseventils 2 manuell durch Einwirken auf ein Betätigungsorgan 21 veränderbar ist. Eine Verschiebung des Steuerschiebers 20 infolge des Drucks in der Vorratsleitung 11 ist durch einen Anschlag in der ersten Stellung begrenzt.

Das Anhängerbremsventil 3 besitzt einen Anschluss 22, welcher mit dem Anschluss 17 verbunden ist, sowie einen Anschluss 23, der mit dem Anschluss 18 verbunden ist. Weiterhin besitzt das Anhängerbremsventil 3 einen Anschluss 24, der mit einem dem Kupplungskopf zugeordneten Vorratsbehälter 25 verbunden ist. Ein Anschluss 26 des Anhängerbremsventils 3 ist mit der Bremssteuerleitung 13 verbunden. Ein weiterer Anschluss 27 ist über den Vorratsbehälter 5 mit einem Anschluss 28 der Regeleinrichtung 6 verbunden. Weiterhin besitzt das Anhängerbremsventil 3 einen Anschluss 29 sowie einen Anschluss 30. Der Anschluss 29 ist mit einer Steuerleitung 31 für die Regeleinrichtung 6 verbunden, von der eine Leitung 32 abzweigt, die mit einem zweiten Eingang 33 des Wechselventils 14 verbunden ist. Der Anschluss 30 ist mit einem Anschluss 34 des Ventils 4 verbunden. Der Anschluss 17 des Löseventils 2 ist mit einem weiteren Anschluss 35 des Ventils 4 verbunden. Ein Anschluss 36 ist mit einem ersten Eingang 37 des Wechselventils 14 verbunden. Ein Ausgang 38 des Wechselventils 14 ist mit dem Federspeicherbremszylinder 8 verbunden. Die Regeleinrichtung 6 besitzt einen Anschluss 39, der mit dem Betriebsbremszylinder 9 verbunden ist und welchen die Regeleinrichtung 6 mit einem ausgeregelten Druck des Vorratsbehälters 5 beaufschlagt, der von dem Druck in der Steuerleitung 31 und von einer ABS-, EBS- und/oder ALB-Funktion abhängig ist.

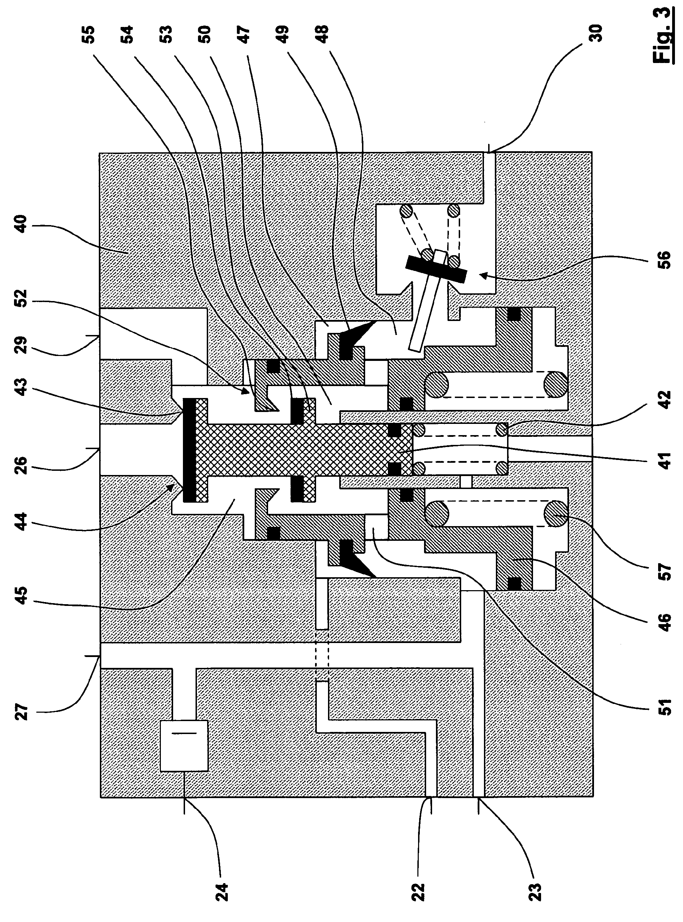

In **Fig. 3** ist ein Anhängerbremsventil 3 in größerem Detail dargestellt. In einem Gehäuse 40 ist ein Steuerelement 41 verschieblich geführt und über eine Feder 42 in der in Fig. 3 dargestellten Stellung gegen einen Ventilsitz 43 des Gehäuses 40 unter Abdichtung gepresst. Hiermit ist ein Ventil 44 geschaffen, welches in der dargestellten Schließstellung die Anschlüsse 26, 29 voneinander trennt, während in einer Öffnungsstellung, in welcher die Feder 42 in höherem Maße beaufschlagt ist, über das Ventil 44 eine Verbindung zwischen den Anschlüssen 26, 29 geschaffen ist. In einer Ausnehmung 45 des Gehäuses 40, in welcher auch das Steuerelement 41 angeordnet ist, ist in einer abgestuften Bohrung ein abgestufter Kolben 46 angeordnet. Zwischen einer Mantelfläche des Kolbens 46 und einer Bohrung des Gehäuses sind Ringkammern 47, 48 gebildet, die über ein Rückschlagventil 49 voneinander getrennt sind. Das Rückschlagventil 49 ermöglicht ein Überströmen von der Ringkammer 47 zu der Ringkammer 48, während eine umgekehrte Strömung durch das Rückschlagventil unterbunden ist. Für das dargestellte Ausführungsbeispiel ist das Rückschlagventil 49 mit einer Rückschlaglippe ausgebildet. Die Ringkammer 47 ist mit dem Anschluss 22 verbunden, so dass auf die Ringkammer 47 für vorhandenen Druck in der Vorratsleitung 11 dieser Druck wirkt. Die Ringkammer 48 ist mit den Anschlüssen 23, 27 verbunden. Für vorhandenen Druck in der Vorratsleitung 11 strömt Druckluft aus der Vorratsleitung 11 über den Anschluss 22, die Ringkammer 47, das Rückschlagventil 49, die Ringkammer 48 und den Anschluss 27 zu dem Behälter 5, so dass ein Befüllung des Vorratsbehälters 5 über das Anhängerbremsventil 3 ermöglicht ist. Befindet sich hingegen das Löseventil 2 in seiner zweiten Stellung, also nicht in der in Fig. 2 dargestellten Stellung, sind die Ringkammern 47, 48 über das Löseventil miteinander verbunden.

Innenliegend von dem Kolben 46 ist eine innere Kammer 50 gebildet, die über eine Bohrung 51 mit der Ringkammer 48 ständig verbunden ist. Weiterhin bilden das Steuerelement 41 und der Kolben 46 ein Ventil 52, welches in geöffnetem Zustand eine Verbindung zwischen der Kammer 50 über die Ausnehmung 45 zu dem Anschluss 29 schafft. Zur Bildung des Ventils 52 besitzt das Steuerelement 41 einen umlaufenden Bund 53, der einen Ventilsitz 54 bildet. Der Kolben 46 bildet in seinem Endbereich einen Ventilkörper 55, der in geschlossenem Zustand des Ventils 52 unter Abdichtung zur Anlage an den Ventilsitz 54 kommt. Während das Ventil 44 mit Bewegung des Steuerelementes 41 nach unten geöffnet wird, führt eine Relativbewegung des Steuerelementes 41 gegenüber dem Kolben 46 nach unten zu einer Öffnung des Ventils 52. Der Ringraum 48 ist über ein Rückschlagventil 56 mit dem Anschluss 30 verbunden. Ein seiner Funktion als Rückschlagventil öffnet dieses für ein Überströmen von der Ringkammer 48 zu dem Anschluss 30. Alternativ oder zusätzlich kann das Rückschlagventil 56 u. U. auch für eine umgekehrte Strömung oder unterhalb eines etwaigen Öffnungsdrucks des Rückschlagventils bewegungsgesteuert geöffnet werden. Mit einer Verschiebung des Kolbens 46 nach oben kommt ein Vorsprung der Mantelfläche des Kolbens zur Anlage an einen Fortsatz des Rückschlagventils 56 und verkippt mit weiterer Verschiebung des Kolbens 46 das Rückschlagventil 56, so dass dieses eine Öffnungsstellung einnehmen kann. Der Kolben 46 ist über eine Feder 57 abgestützt, welche den Kolben 46 in Richtung einer Öffnungsstellung des Ventils 52 beaufschlagt.

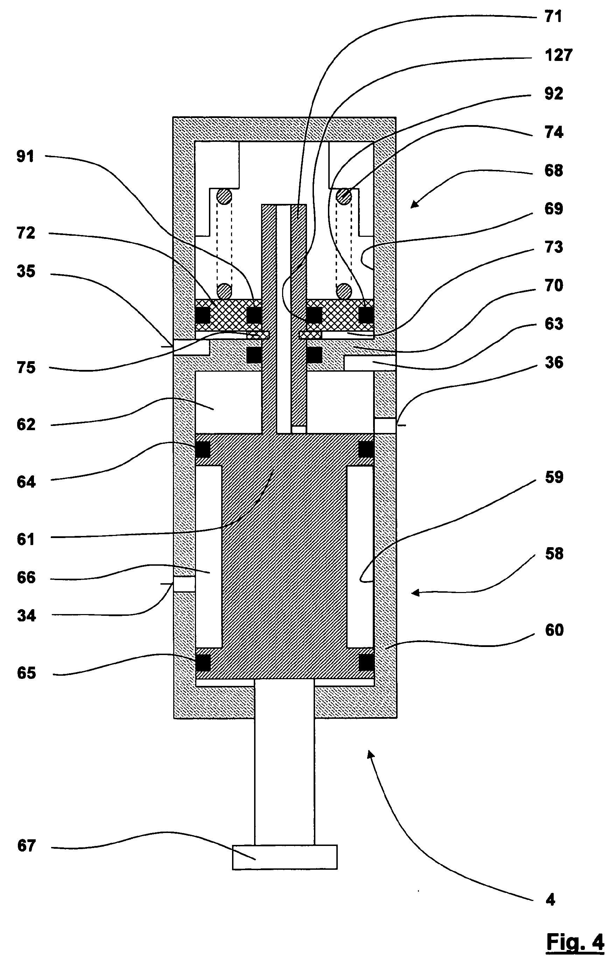

Das Ventil 4 ist in größerem Detail in **Fig. 4** dargestellt. Das Ventil 4 verfügt über eine Steuereinheit 58. Die Steuereinheit ist mit einer Bohrung 59 eines Gehäuses 60 gebildet, in welche die Anschlüsse 34, 36 axial voneinander beabstandet einmünden. In der Bohrung 59 ist axial verschieblich ein Ventilelement 61 geführt, welches zwischen einer Stirnseite und dem Gehäuse 60 eine Entlüftungskammer 62 bildet, die in ständiger Verbindung mit einer Entlüftung 63 steht. Das Ventilelement 61 ist für die dargestellten Ausführungsformen als Schieberventil ausgebildet, wobei abweichend auch eine Ausbildung als Sitzventil möglich ist. Das Ventilelement 61 besitzt axial voneinander beabstandete, gegenüber der Bohrung 59 abgedichtete Steuerkanten 64, 65, zwischen denen zwischen Ventilelement 61 und Gehäuse 60 eine hohlzylinderförmige Ringkammer 66 ausgebildet ist. In einer oberen ersten Stellung der Steuereinheit sind über die Ringkammer 66 die Anschlüsse 34, 36 miteinander verbunden, während mit einer Bewegung des Ventilelementes 61 nach unten in die in Fig. 4 dargestellte Stellung die Steuerkante 64 dem Anschluss 36 überfährt, so dass in der skizzierten zweiten Stellung, die hier auch als "Entlüftungsstellung" bezeichnet ist, die Anschlüsse 34, 36 über die Steuerkante 64 voneinander getrennt sind. In dieser Stellung mündet der Anschluss 36 in die Entlüftungskammer 62, so dass eine Entlüftung von Anschluss 36 ermöglicht ist. Das Ventilelement 61 ist starr mit einem Betätigungsorgan 67 gekoppelt, über welches manuell eine Betätigung des Ventils 4 ermöglicht ist.

Darüber hinaus besitzt das Ventil eine automatische Betätigungseinheit 68. Die Betätigungseinheit 68 weist eine Bohrung 69 auf, wobei die Bohrungen 59, 69 fluchtend zueinander hintereinander liegend angeordnet sind und durch eine Trennwand 70 voneinander getrennt sind. Das Ventilelement 61 besitzt einen starr mit diesem gekoppelten stabförmigen oder wellenartigen Fortsatz 71, welcher sich durch die Trennwand 70 in die Ausnehmung oder Bohrung 69 erstreckt. In der Bohrung 69 ist verschieblich ein Betätigungskolben 72 mit kreisringförmiger Kolbenfläche mit einer Ausnehmung 127 geführt, wobei der Betätigungskolben 72 radial innen liegend gegenüber dem Fortsatz 71 sowie radial außen liegend gegenüber der Bohrung 69 jeweils abgedichtet und verschieblich unter Abdichtung mittels in Nuten der Trennwand 70 angeordneten Dichtelementen 91, 92 oder O-Ringen gelagert ist. Von der Kolbenfläche des Betätigungskolbens 72, der Bohrung 69, der Mantelfläche des Fortsatzes 71 und der Stirnwand 70 begrenzt ist eine Betätigungskammer 73, die mit dem Anschluss 35 verbunden ist und der der Druck der Vorratsleitung 11 zugeführt ist. Der Betätigungskolben 72 ist auf der der Betätigungskammer 73 gegenüberliegenden Seite gegenüber dem Gehäuse über eine Druckkräfte aufnehmende Feder 74 abgestützt, welche den Betätigungskolben 72 für drucklose Betätigungskammer 73 in die in Fig. 4 skizzierte Stellung bringen kann. Für die Beaufschlagung der Betätigungskammer 73 mit dem Druck der Vorratsleitung 11 wird der Betätigungskolben 72 aus der in Fig. 4 dargestellten Stellung unter Beaufschlagung der Betätigungsfeder 74 nach oben bewegt. Infolge des Freiheitsgrades des Betätigungskolbens 72 gegenüber dem Fortsatz 71 ist durch diese Bewegung die Stellung des Ventilelementes 61 nicht zwingend verändert. Allerdings kann das Ventilelement 61 auf eine manuelle Betätigung des Betätigungsorgans 67 dieser Bewegung folgen. Der Fortsatz 71 besitzt einen Absatz, der für das in Fig. 4 dargestellte Ausführungsbeispiel mit einem Sicherungsring 75 gebildet ist. Für nach oben bewegten Betätigungskolben 72 und betätigtes Betätigungsorgan 67, also für das Ventilelement 61 in der ersten Stellung, liegt der Sicherungsring 75 an dem Betätigungskolben 72 an. Ein Abfall des Druckes in der Vorratsleitung 11 hat zur Folge, dass die Betätigungsfeder 74 den Betätigungskolben unter Verringerung des Volumens der Betätigungskammer 73 nach unten bewegt. Für diese Bewegung nimmt der Betätigungskolben 72 infolge der Anlage desselben an dem Sicherungsring 75 den Fortsatz und das Ventilelement 61 mit, so dass mit dem Abfall des Drucks in der Vorratsleitung 11 automatisiert das Ventil 4 von der ersten Stellung in die in Fig. 4 dargestellte zweite Stellung verbracht wird.

Für das in Fig. 1 dargestellte abgewandelte Ausführungsbeispiel des Ventils 4a ist die Steuereinheit 58 einschließlich des Fortsatzes 71, der Trennwand 70 und des Sicherungsringes 75 entsprechend dem in Fig. 4 dargestellten Ausführungsbeispiel des Ventils 4 ausgebildet. Abweichend ist allerdings hier der Betätigungskolben 72a als gestufter Kolben ausgebildet mit einer ersten kreisringförmigen Kolbenfläche 93 und einer zweiten kreisringförmigen Kolbenfläche 94, deren Innenradius dem Außenradius der ersten Kolbenfläche 93 entspricht. In diesem Fall ist die Bohrung 69a in dem der Trennwand 70 zugeordneten Endbereich abgestuft derart ausgebildet, dass für die in Fig. 1 dargestellte Stellung die Kolbenflächen 93, 94 an Abstufungen der Bohrung anliegen oder lediglich einen geringen Abstand zu diesen aufweisen, so dass eine Druckbeaufschlagung der Kolbenflächen 93, 94 mit kleinen Fördervolumina gewährleistet ist. Der abgestufte Betätigungskolben 72a besitzt für die jeweilige Kolbenfläche 93, 94 wirksame Dichtelemente 95, 96, mit welchen der Betätigungskolben 72a radial außen liegend gegenüber der Bohrung 69a abgedichtet ist. Für das in Fig. 1 dargestellte Ausführungsbeispiel ist das der ersten Kolbenfläche 93 zugeordnete Dichtelement 95 als radial nach außen wirkender Radialwellendichtring ausgebildet, während das der zweiten Kolbenfläche 94 zugeordnete Dichtelement 96 als O-Ring ausgebildet ist. Die Dichtelemente 95, 96 sind in radialen Nuten des Betätigungskolbens 72a angeordnet. In diesem Fall ist eine erste Betätigungskammer 73a zwischen der ersten Kolbenfläche 93 und dem Gehäuse 60 gebildet sowie eine zweite Betätigungskammer 97 zwischen der zweiten Kolbenfläche 94 und dem Gehäuse 60, wobei für die in Fig. 1 dargestellte Stellung die Volumina der Betätigungskammern 73a, 96 minimal sind oder 0 betragen kann. Ein Verbindungskanal 98 ist vorgesehen, welcher in einem Teilbereich der Betriebsstellungen des Ventils 4a eine Verbindung zwischen den Betätigungskammern 73a und 97 herstellt. Der Verbindungskanal 98 mündet radial nach innen in den Bereich mit verringertem Durchmesser der abgestuften Bohrung 69a, wobei der Mündungsort in der in Fig. 1 dargestellten Stellung des Ventils 4 hinter dem Dichtelement 95 liegt. Somit ist eine Verbindung des Verbindungskanals 98 mit der Betätigungskammer 73a erst dann geschaffen, wenn sich der Betätigungskolben 72a aus der in Fig. 1 dargestellten Stellung einen Teilweg nach links bewegt hat, also wenn der Druck in der Vorratsleitung und in der Betätigungskammer 73a hinreichend angestiegen ist. Der Verbindungskanal 98 mündet weiterhin in eine quer zur Längsachse des Ventils orientierte Querfläche oder Abstufung der Bohrung 69a in die Betätigungskammer 97. Somit wirkt der Druck in der Vorratsleitung 11 zunächst lediglich auf die Betätigungskammer 73a und die erste Kolbenfläche 93. Mit Überfahren der Mündung des Verbindungskanals 98 durch das Dichtelement 95 wird der Druck in der Vorratsleitung 11 aus der Betätigungskammer 73a über den Verbindungskanal 98 der Betätigungskammer 97 zugeführt und wirkt dann auch auf die zweite Kolbenfläche 94, wodurch eine vergrößerte Kraft auf den Betätigungskolben 72a ausgeübt wird. Somit kann ein nichtlinearer Kraftanstieg durch Einsatz des abgestuften Kolbens erzielt werden, wobei eine konstruktive Gestaltung der nichtlinearen Kraftcharakteristik unter konstruktiver Vorgabe einer Drosselwirkung durch den Verbindungskanal 98, die Mündungslage des Verbindungskanals in den abgestuften Bereich der Bohrung 69a und die konstruktive Vorgabe der Kolbenflächen 93, 94 erfolgen kann.

### Die Funktionsweise der Bremsanlage 1 gemäß Fig. 2-4 ist wie folgt:

Wird der Anhänger mit dem Zugfahrzeug über den Kupplungskopf Vorrat 10 gekoppelt, wirkt der Druck der Vorratsleitung 11 auf die Stirnfläche des Steuerschiebers 20 und bringt diesen in die in Fig. 2 dargestellte erste Stellung. Es erfolgt eine Befüllung des Vorratsbehälters 5 über den Kupplungskopfvorrat 10, Vorratsleitung 11, Druckraum 19, Anschluss 17, Anschluss 22, Ringkammer 47, Rückschlagventil 49, Ringkammer 48, Anschluss 27. Infolge eines Einwirkens des steigenden Drucks auf die der Feder 57 gegenüberliegende Kolbenfläche des Kolbens 46 wird mit einer zunehmenden Befüllung des Vorratsbehälters 5 der Kolben 46 unter Beaufschlagung der Feder 57 nach unten gedrückt. Dies hat ein Schließen des Ventils 52 zur Folge. Weiterhin nimmt der Kolben 46 mit zunehmender Bewegung des Kolbens 46 für geschlossenes Ventil 52 auch das Steuerelement 41 mit nach unten, was ein Öffnen des Ventils 44 zur Folge hat. Während sich das Ventil für den Beginn des Kupplungsvorganges in der zweiten Stellung gemäß Figuren 2 und 4 befindet, führt das Ansteigen des Druckes an dem Anschluss 17 - und damit an dem Anschluss 35 - zu einer Druckbeaufschlagung der Betätigungskammer 73, die den Betätigungskolben 72 nach oben schiebt, ohne dass sich die Stellung des Ventilelementes 61 verändert. Die Ringkammer 66 ist hierbei mit dem Druck der Vorratsleitung 11 beaufschlagt, wobei hierdurch keine Kraft auf das Ventilelement 61 ausgeübt wird. Ohne manuelle Betätigung des Betätigungsorgans 67 ist somit der Anschluss 36 entlüftet, was (ohne Belüftung des zweiten Eingangs 33 des Wechselventils 14) die Entlüftung des Federspeicherbremszylinders 8 zur Folge hat. Wird hingegen das Ventil 4 manuell betätigt in die erste Stellung, wird der Federspeicherbremszylinder 8 über das Wechselventil 14, den ersten Eingang 37, Anschluss 36, Ringkammer 66, Anschluss 34, Anschluss 30, Rückschlagventil 56, Ringkammer 48, Rückschlagventil 49, Ringkammer 47, Anschluss 22, Anschluss 17, Druckraum 19 auf dem Niveau des Drucks der Vorratsleitung 11 gehalten, so dass mit Druckbeaufschlagung des Federspeicherbremszylinders die Federspeicherbremse gelöst werden kann. Mit ordnungsgemäßem Druck in der Vorratsleitung 11 befindet sich das Ventil 44 in seiner Öffnungsstellung, so dass der Bremssteuerdruck der Bremssteuerleitung 13 über den Anschluss 26, das Ventil 44 und den Anschluss 29 über die Steuerleitung 31 der Regeleinrichtung 6 zugeführt werden kann, so dass gezielt eine geregelte Bremsung über den Betriebsbremszylinder 9 erfolgen kann.

Erfolgt ein Entkoppeln von dem Zugfahrzeug für aufgeladene Bremsanlage 1, schließt zunächst das Ventil 44, während das Ventil 52 automatisch in seine Öffnungsstellung geht. Bei geeigneter Beaufschlagung eines Ventilelementes 76 kann dann in einer Notbremssituation für einen Bremsvorgang der Druck des Vorratsbehälters 25 genutzt werden, um über die Ringkammer 48, Bohrung 51, Kammer 50, Ventil 52 und Anschluss 29 sowie Steuerleitung 31 einen Bremsvorgang zu bewirken. Für ausreichenden Druck in der Steuerleitung 31 gelangt dieser über das Wechselventil 14 in den Federspeicherbremszylinder 8, so dass der Federspeicherbremszylinder belüftet ist, obwohl das Ventil 4 infolge des Einbruchs des Druckes in der Vorratsleitung 11 in der in Fig. 2 dargestellten Entlüftungsstellung ist, während eine Bremsung durch die Regeleinrichtung 6 über den Betriebsbremszylinder 9 verursacht wird.

Für ein erneutes Ankoppeln an das Zugfahrzeug kehrt der Kolben 46 wieder in seine untere Stellung zurück. Das Ventil 44 öffnet, was ohne Bremssteuerdruck zur Folge hat, dass die Betriebsbremszylinder 9 entlüftet werden, während das Ventil 52 geschlossen wird. Der Druck in der Vorratsleitung 11 führt dazu, dass der Betätigungskolben 72 der Betätigungseinheit 68 in die obere Stellung überführt wird. Dennoch bleibt der Federspeicherbremszylinder 8 weiter über das Ventil 4 entlüftet, so dass für ein Lösen der Federspeicherbremse die manuelle Betätigung des Ventils 4 erforderlich ist.

Zusammenfassend ist festzustellen, dass einerseits über die Betätigungseinheit 68 zuverlässig automatisiert dafür Sorge getragen ist, dass sich bei einem Abfall oder Einbruch des Druckes in der Vorratsleitung 11, beispielsweise durch einen Abriss der Vorratsleitung oder eine Leckage, das Ventil 4 in der in den Figuren 2 und 4 dargestellten Entlüftungsstellung befindet. Während dies in einer echten Parksituation vorteilhaft ist und zu der Entlüftung des Federspeicherbremszylinders 8 führt zwecks Einlegung der Feststell- oder Parkbremse, wird diese Funktion gemäß Fig. 2 in einer echten Notbremssituation dadurch verändert, dass in der Notbremssituation der Druck in der Steuerleitung 31, welcher dem Behälter 25 entstammen kann, über das Wechselventil 14 dem Federspeicherbremszylinder 8 zugeführt wird, wobei dieser Druck ausreichend ist, um die Federspeicherbremse vollständig zu lösen. Somit erfolgt eine ausschließliche Regelung der Bremskraft über den Betriebsbremszylinder 9 durch eine Vorgabe des Druckes über die Regeleinrichtung 6 unter Berücksichtigung
- des Drucks in der Steuerleitung 31,
- der Traktion über ein ABS-/EBS-System und/oder
- eines ALB-Systems.

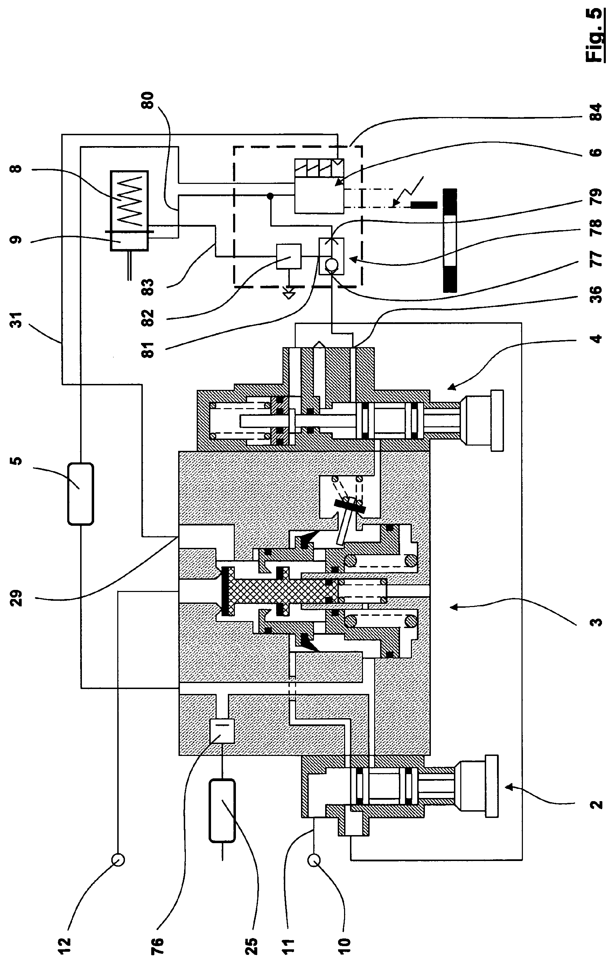

Anders stellt sich bei ansonsten Fig. 2 entsprechender Ausgestaltung die Situation für die Bremsanlage 1 gemäß **Fig. 5** dar. In dieser ist ebenfalls der Anschluss 29 über die Steuerleitung 31 mit einem Steueranschluss der Regeleinrichtung 6 verbunden. Der Anschluss 36 ist mit einem ersten Eingang 77 eines Wechselventils 78 verbunden, dessen zweiter Eingang 79 mit der von der Regeleinrichtung 6 zu dem Betriebsbremszylinder 9 führenden Betriebsbremsleitung 80 verbunden ist. Ein Ausgang 81 des Wechselventils 78 ist, hier über ein Schnelllöseventil 82, mit einer Feststellbremsleitung 83 mit dem Federspeicherbremszylinder 8 verbunden. Der Regeleinrichtung 6 wird das elektrische Signal eines Raddrehzahlsensors und/oder eines Niveausensors zugeführt.

Für das in Fig. 5 dargestellte Ausführungsbeispiel führt eine Notbremssituation dazu, dass das Ventil 4 in seine Entlüftungsstellung überführt wird. Zur Durchführung eines geregelten Bremsvorganges wird die Regeleinrichtung 6 aus dem Behälter 25 über den Anschluss 29 mit einem Steuerdruck beaufschlagt, wobei die Regeleinrichtung einen je nach Traktion und Beladung ausgesteuerten Druck in der Betriebsbremsleitung 80 erzeugt. Dieser Druck wird über das Wechselventil 78 und das Schnelllöseventil 82 dem Federspeicherbremszylinder 8 zugeführt. Ist dieser Druck bei entsprechender Traktion und/oder Beladung des Anhängers kleiner als der Lösedruck des Federspeicherbremszylinders, tritt eine Federspeicherbremswirkung zu der eigentlich gewünschten Bremswirkung des Betriebsbremszylinders hinzu, wodurch ein Regelfehler der Regeleinrichtung erzeugt wird. Während diese Probleme beseitigt würden durch eine Zuführung des Bremssteuerdruckes in der Steuerleitung 31 zu dem zweiten Eingang 79 des Wechselventils 78 anstelle des ausgeregelten Betriebsbremsdruckes in der Betriebsbremsleitung 80, soll aus Gründen einer Bauteilvereinheitlichung für unterschiedliche Anwendungen unter Umständen dennoch eine Baueinheit 84 eingesetzt werden, die mit der Regeleinrichtung 6 und dem Wechselventil 78 gebildet ist und unter Umständen mit einem zusätzlichen Schnelllöseventil 82 und/oder anderen pneumatischen Bauelementen. Die Baueinheit 84 besitzt einen Anschluss für die Verbindung mit dem Ventil 4, einen Anschluss für eine Verbindung mit der Feststellbremsleitung 83, einen Anschluss für eine Verbindung mit der Betriebsbremsleitung 80, einen Anschluss für eine Verbindung mit dem Vorratsbehälter 5 sowie einen Anschluss für eine Verbindung mit der Steuerleitung 31. Weitere elektrische Anschlüsse sind zur Anbindung der Regeleinrichtung 6 an weitere Steuereinheiten, zur Zuführung von Messsignalen und zur Ausgabe von Steuersignalen für außerhalb der Baueinheit 84 angeordnete elektrische oder elektropneumatische Bauelemente und/oder an ein Bussystem vorhanden.

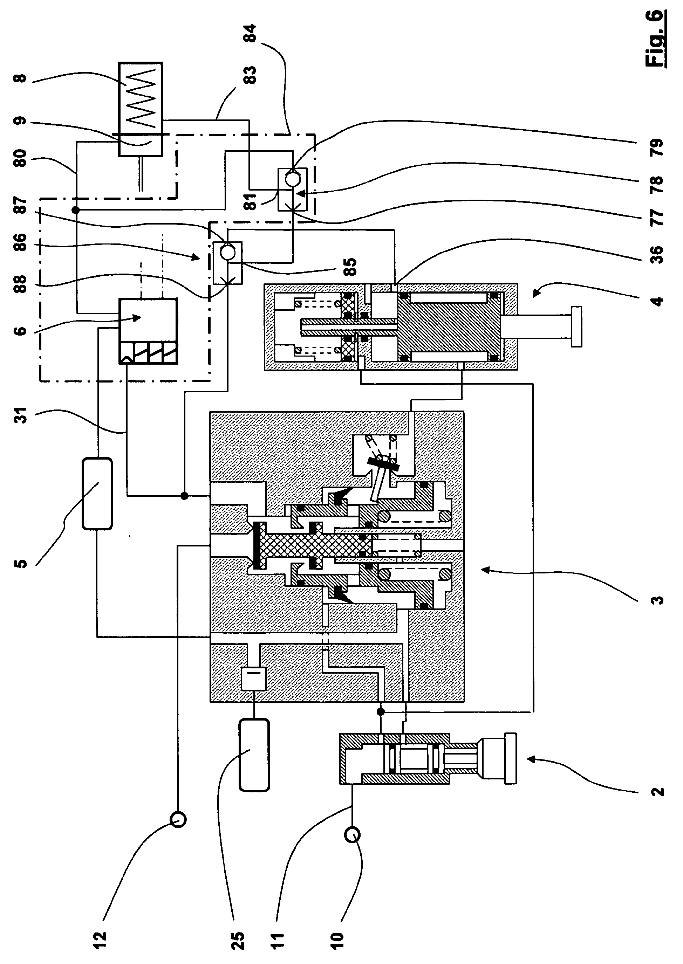

Die weiteren Figuren zeigen Ausführungsbeispiele zur Vermeidung der erläuterten Problematik trotz Einsatzes einer Baueinheit 84, in welcher dem Wechselventil 78 der ausgeregelten Betriebsbremsdruck zugeführt wird:
Für das in **Fig.** 6 dargestellte Ausführungsbeispiel ist der erste Eingang 77 des Wechselventils 78 mit dem Ausgang 85 eines weiteren Wechselventils 86 verbunden, welches außerhalb der Baueinheit 84 angeordnet ist. Der erste Eingang 87 des weiteren Wechselventils 86 ist mit dem Anschluss 36 des Ventils 4 verbunden, während der zweite Eingang 88 des weiteren Wechselventils 86 mit der Steuerleitung 31 verbunden ist. Soll in einer Notbremssituation infolge eines Abrisses der Vorratsleitung oder eines Abfalls des Druckes in der Vorratsleitung 11 ein geregelter Bremsvorgang herbeigeführt werden, leitet das Wechselventil 86 den an dem zweiten Eingang 88 anliegenden Steuerdruck der Steuerleitung 31 über den Ausgang 85 an den ersten Eingang des ersten Wechselventils 78. An dem zweiten Eingang 79 liegt zwar der geregelte Betriebsbremsdruck an. Allerdings gibt das Wechselventil 78 den ungeregelten Steuerdruck an den Ausgang 81 des ersten Wechselventils 78 und damit zu dem Feststellbremszylinder 8 weiter, so dass dieser vollständig entlüftet wird. Somit entspricht die alleinig mit dem Betriebsbremszylinder 9 herbeigeführte Bremskraft dem durch die Regeleinrichtung 6 geregelten Betriebsbremsdruck. Durch zusätzlichen Einsatz des Wechselventils 86 ist somit eine Regelung der Bremskraft ohne einen Regelungsfehler trotz Einsatzes einer entsprechend Fig. 5 ausgebildeten Baueinheit 84 möglich.

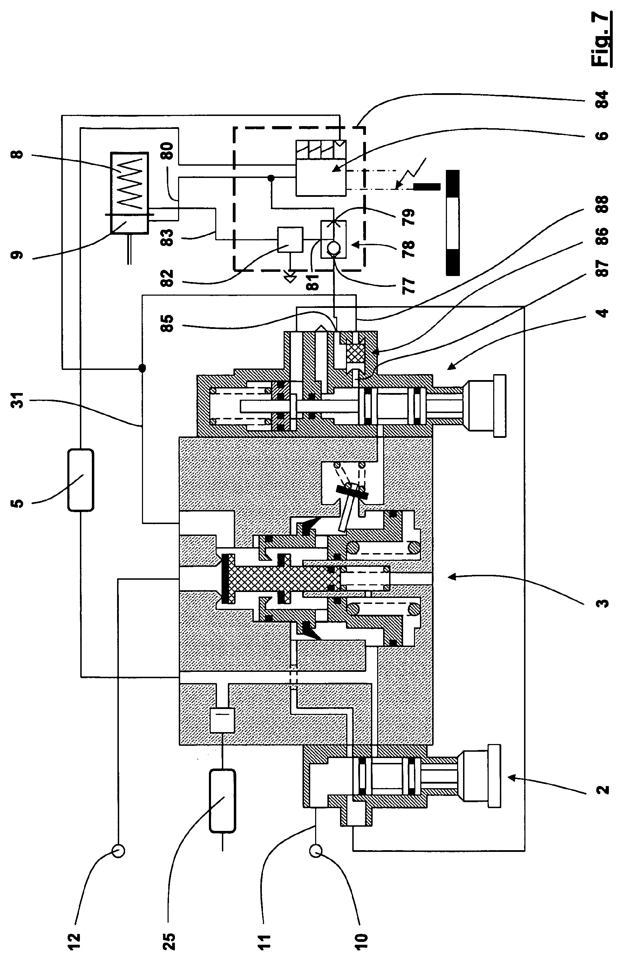

Für das in **Fig. 7** dargestellte Ausführungsbeispiel ist - bei im Wesentlichen Fig. 6 entsprechender Verschaltung - das Wechselventil 86 in das Gehäuse des Ventils 4 integriert. Dieses erfolgt beispielsweise auf der dem Anhängerbremsventil abgewandten Seite in einer Ausbuchtung des Gehäuses 60, wobei der erste Eingang 87 unmittelbar in die Entlüftungskammer 62 mündet und der zweite Eingang 88 und der Ausgang 85 unmittelbar Anschlüsse des Gehäuses 60 bilden.

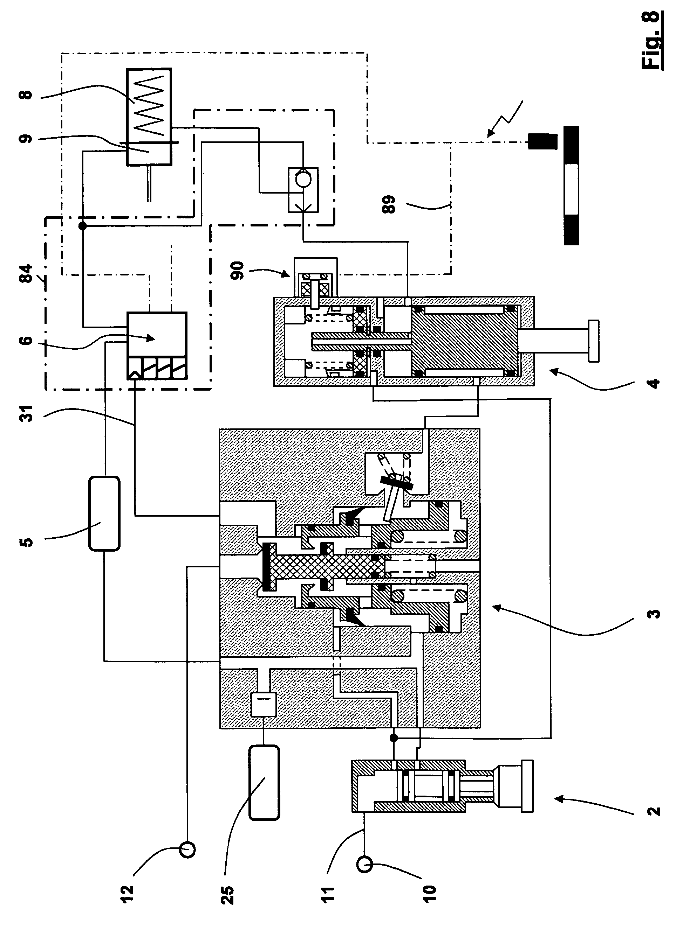

**Fig. 8** zeigt eine Ausführungsform mit einer mechanischen Verriegelung des Betätigungskolbens 72 der Betätigungseinheit 68. Hierzu ist eine Verriegelungseinrichtung 90 an dem Ventil 4 vorgesehen, über die der Betätigungskolben 72 in seiner oberen Position, die der Stellung für anliegenden Druck in der Vorratsleitung 11 entspricht, verriegelt werden kann. Die Verriegelungseinrichtung 90 besitzt einen elektromagnetischen Aktuator, über den bei einem geeigneten Steuersignal in der Steuerleitung 89, beispielsweise von der Regeleinrichtung 6, für den Fall, dass der Druck in der Vorratsleitung 11 vorhanden ist und sich der Anhänger bewegt, der Betätigungskolben 72 verriegelt wird, während die Verriegelungseinrichtung 90 in einer Parksituation für ruhenden Anhänger den Betätigungskolben 72 freigibt.

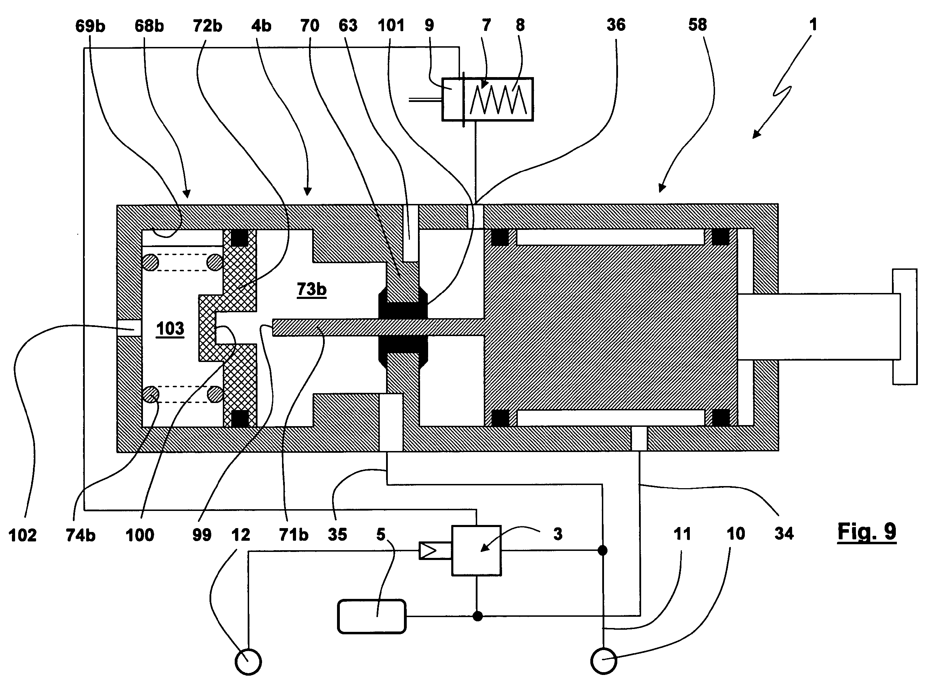

**Fig. 9** zeigt eine weitere Ausführungsform eines Ventils 4b. Die Ausbildung der Steuereinheit 58 entspricht im Wesentlichen der Ausgestaltung gemäß Fig. 4. Abweichend ist hingegen die Betätigungseinheit 68b ausgebildet: In diesem Fall ist der Betätigungskolben 72b durchgehend ausgebildet mit einer durchgehenden, kreisförmigen Kolbenfläche, wobei der Betätigungskolben 72b unter radialer Abdichtung in der Bohrung 69b gleitend geführt ist. Gemäß Fig. 9 befindet sich das Ventil 4b mit der Steuereinheit 58 in der Entlüftungsstellung, während die Betätigungskammer 73b druckbeaufschlagt ist, so dass der Betätigungskolben 72b unter Beaufschlagung der Betätigungsfeder 74b maximal nach links verschoben ist, beispielsweise gegen einen Anschlag. In dieser Stellung besitzt eine Stirnseite 99 des Fortsatzes 71 b einen Abstand von einer Gegenfläche 100 des Betätigungskolbens 72b, wobei der Abstand vorzugsweise der Bewegung des Steuerelementes 58 zwischen der Belüftungsstellung und der Entlüftungsstellung entspricht. Für das in Fig. 9 dargestellte Ausführungsbeispiel ist die Gegenfläche 100 in Richtung der Betätigungsfeder 74b zurückversetzt, so dass der Betätigungskolben 72b nicht als ebene Scheibe ausgebildet ist, sondern mittig eine Vertiefung und Ausbeulung in Richtung auf die dem Fortsatz 71 b abgewandte Seite besitzt. Hierdurch kann axiale Baulänge für das Ventil 4b eingespart werden. In dem in Fig. 9 dargestellten Ausführungsbeispiel ist zwischen der Trennwand 70 und dem Fortsatz 71 b eine kompakte Dicht- und Führungseinheit 101 angeordnet. Das Gehäuse 60 des Ventils 4b besitzt eine Entlüftungsbohrung 102, über welche die Kammer 103 auf der der Betätigungskammer 73b abgewandten Seite des Betätigungskolbens 72b mit der Bewegung des Betätigungskolbens 72b entlüftet wird. Hingegen erfolgt eine Entlüftung für das in Fig. 1 dargestellte Ausführungsbeispiel über einen Entlüftungskanal 104, welcher in Form einer stirnseitigen Bohrung des Fortsatzes 71 ausgebildet ist, die in die Kammer 103 mündet, sowie einer von dieser Bohrung radial in die Entlüftungskammer 62 mündenden Stichbohrung.

Das Ventil 4b ist gemäß Fig. 9 wie folgt in eine Bremsanlage 1 integriert: Der Kupplungskopf Bremse (12) ist mit dem Steuereingang eines Anhängerbremsventils 3 verbunden. Dem Anhängerbremsventil 3 wird weiterhin der Druck der Vorratsleitung 11 von dem Kupplungskopf Vorrat 10 zugeführt und ermöglicht eine Befüllung des Vorratsbehälters 5. Der Druck der Vorratsleitung 11 ist weiterhin dem Anschluss 35 des Ventils 4b zugeführt. Das Anhängerbremsventil 3 erzeugt einen Betriebsbremsdruck, welcher den Betriebsbremszylinder 9 eines Kombi-Bremszylinders 7 zugeführt ist. Der Ausgang 36 des Ventils 4b ist unmittelbar oder mittelbar mit einem Federspeicherbremszylinder 8 verbunden.

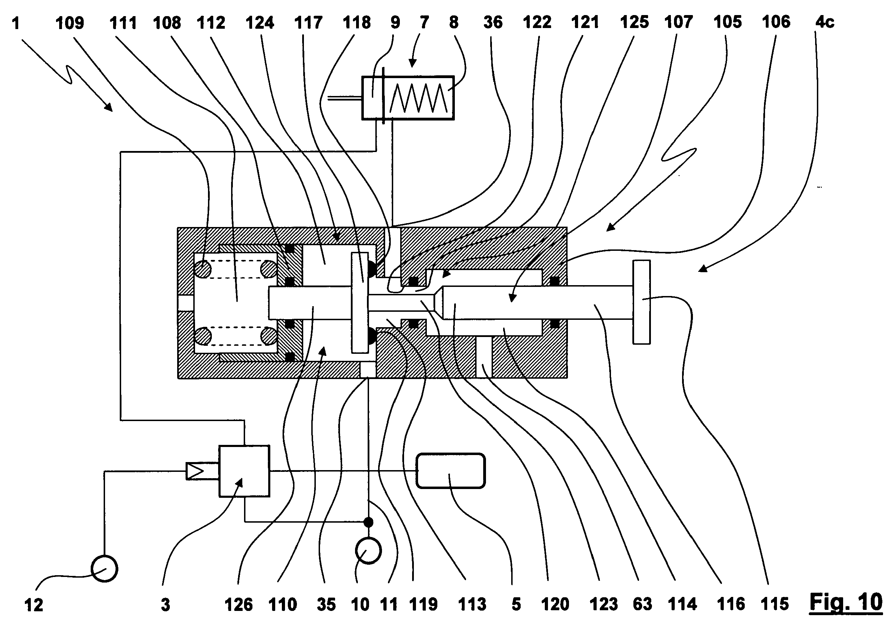

In **Fig. 10-12** ist eine alternative Ausgestaltung eines Ventils 4c, hier integriert in eine Bremsanlage 1, in verschiedenen Betriebsstellungen dargestellt. In diesem Fall ist die Steuereinheit 58 nicht (ausschließlich) in Schieberbauweise ausgebildet, sondern mit einem Sitzventil. Das in den Figuren 10-12 dargestellte Ventil 105 besitzt im Wesentlichen ein Gehäuse 106, ein Ventilelement 107, einen Betätigungskolben 108 und eine Betätigungsfeder 109. In dem Gehäuse 106 ist ein abgestufter Innenraum 110 gebildet vorzugsweise mit kreisringförmigen Teilquerschnitten unterschiedlicher Durchmesser. In dem Innenraum sind zumindest temporär voneinander trennbare Kammern 111, 112, 113, 114 gebildet.

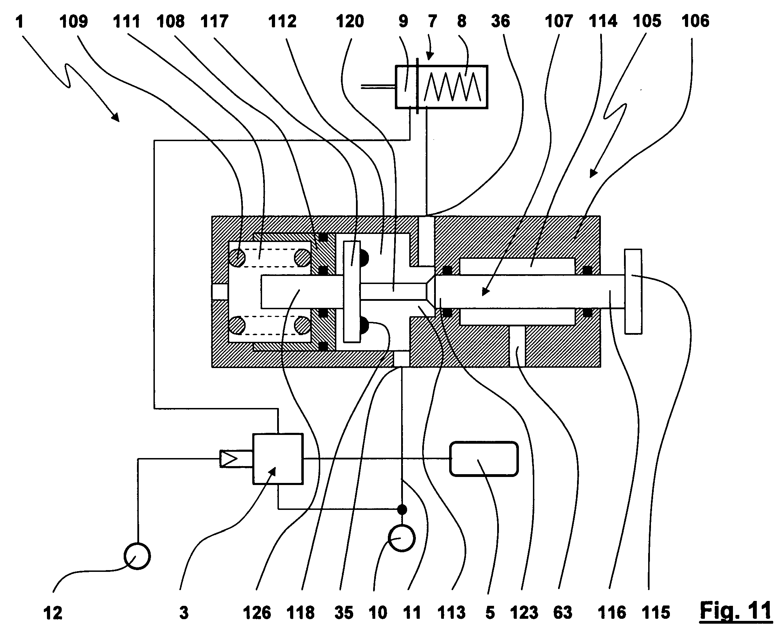

Das Ventilelement 107 besitzt ein Betätigungsorgan 115, insbesondere einen manuellen Betätigungsknopf. Das Betätigungsorgan 115 ist über eine Druckstange 116 mit einem tellerartigen Ventilkörper 117 verbunden, welcher auf der dem Betätigungsorgan 115 zugewandten Seite ein Ventilelement oder Dichtelement 118 trägt. Ventilkörper 117 und Ventilelement 118 bilden mit einem Ventilsitz 119 des Gehäuses 106 ein Belüftungsventil 124, über welches je nach Stellung des Ventilelementes 107 die Kammer 112 mit der Kammer 113 verbindbar und von dieser abtrennbar ist. Die Druckstange 116 besitzt eine Verjüngung 120, welche in der in Fig. 10 dargestellten Stellung einen Ringspalt 121 mit einer abgedichteten Bohrung 122 des Gehäuses 106 bildet. Über den Ringspalt 121 sind in der in Fig. 10 dargestellten Stellung die Kammern 113 und 114 miteinander verbunden. Wird das Ventilelement aus der Stellung gemäß Fig. 10 in die Stellung gemäß Fig. 11 verbracht, überfährt eine Steuerkante 123 oder ein verdickter Bereich der Druckstange 116 die abgedichtete Bohrung 122, wodurch die Kammer 113 von der Kammer 114 getrennt wird.

In die Kammer 112 mündet mit einem Anschluss 35 eine Steuerleitung 11. Über einen Anschluss 36 ist die Kammer 113 mit einem Federspeicherbremszylinder 8 verbunden. Die Kammer 114 ist über einen Entlüftungsanschluss 63 entlüftet. Somit bilden Ventilkörper 117 und Ventilelement 118 mit dem Ventilsitz 119 ein Belüftungsventil 124, während die Verjüngung 120, die Steuerkante 123 und die abgedichtete Bohrung 122 ein Entlüftungsventil 125 bilden.

Auf der dem Ventilkörper 117 abgewandten Seite ist die Kammer 110 durch den Betätigungskolben 108 begrenzt. In dem in den Figuren 10-12 dargestellten Ausführungsbeispiel ist der Betätigungskolben 108 kreisringförmig ausgebildet und radial außenliegend gegenüber der Bohrung des Gehäuses 106 abgedichtet. Radial innenliegend erstreckt sich durch den Betätigungskolben 108 ein von dem Ventilkörper 117 ausgehender Fortsatz 126, wobei eine Abdichtung zwischen Fortsatz 126 und der inneren Bohrung des Betätigungskolbens 108 erfolgt.

Das Ventil 105 findet Einsatz in einer Bremsanlage 1, in der ein Kupplungskopf 12 mit einer Bremssteuerleitung mit einem Steueranschluss eines Anhängerbremsventils 3 verbunden ist. Das Anhängerbremsventil 3 ist ausgangsseitig mit einem Betriebsbremszylinder 9 eines Kombi-Bremszylinders 7 verbunden. Über das Anhängerbremsventil 3 ist eine Befüllung eines Vorratsbehälters 5 aus der Vorratsleitung 11 möglich.

Die Funktion des Ventils 105 ist wie folgt: Für anliegenden Druck in der Vorratsleitung 11 befindet sich das Ventil 105 in der in Fig. 10 dargestellten Stellung. In dieser ist der Betätigungskolben 108 infolge des anliegenden Druckes in der Kammer 112 unter Beaufschlagung der Betätigungsfeder 109 maximal nach links verschoben. Gleichzeitig drückt der anliegende Vorratsleitungsdruck in der Kammer 112 den Ventilkörper 117 nach rechts, so dass sich das Belüftungsventil 124 in seiner geschlossenen Stellung befindet, während das Entlüftungsventil 125 in geöffneter Stellung ist. In dieser Stellung sind somit die Federspeicherbremszylinder 8 über den Anschluss 36, Kammer 113, Ringspalt 121, Kammer 114 und Entlüftungsanschluss 63 entlüftet. Werden mit manueller Betätigung des Betätigungsorgans 115 die von dem Druck in der Kammer 112 bewirkten Kräfte auf den Ventilkörper 117 überwunden, kann das Ventilelement 107 nach links bewegt werden (vgl. fig. 11), so dass das Belüftungsventil 124 in seine Öffnungsstellung geht, während das Entlüftungsventil 125 seine Schließstellung einnimmt. Somit gelangt der Druck in der Vorratsleitung 11 über den Anschluss 35, Kammer 112, Belüftungsventil 124, Kammer 113, Anschluss 36 in den Federspeicherbremszylinder, so dass die Federspeicherbremse infolge der manuellen Betätigung gelöst werden kann. Ist beispielsweise ein Rangierbetrieb oder ein Testbetrieb beendet, kann über manuelle Betätigung des Betätigungsorgans 115 das Ventil 105 wieder in die in Fig. 10 dargestellte Stellung verbracht werden.

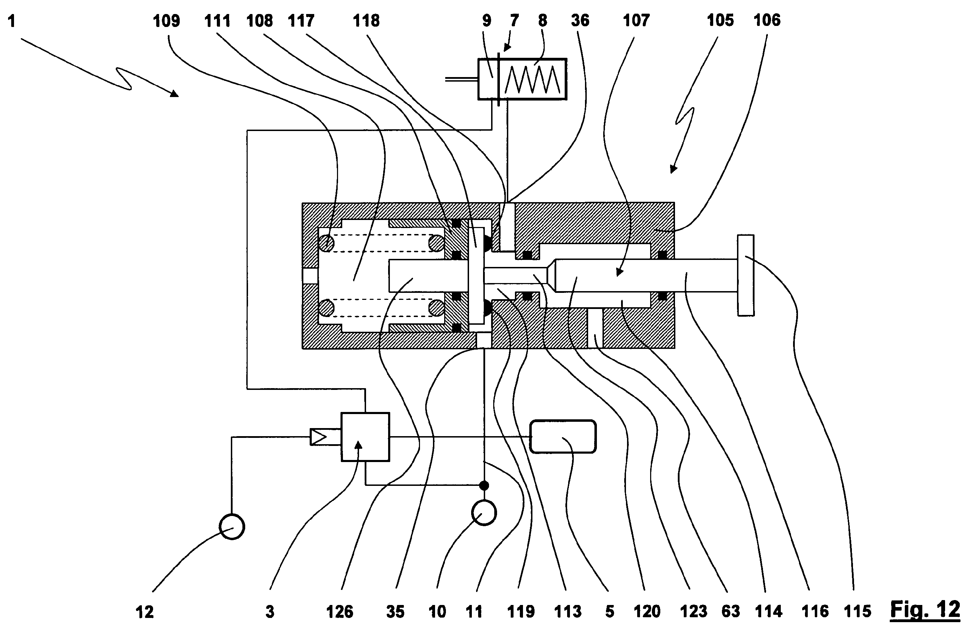

Bricht hingegen in der in Fig. 11 dargestellten Stellung für gelöste Federspeicherbremszylinder, insbesondere in einer Notbremssituation oder für ein Abkoppeln des Anhängers von einer Druckluftversorgung, der Druck in der Vorratsleitung und somit auch der Druck in der Kammer 112 ein, so überwiegt an dem Betätigungskolben 108 die Kraft der Betätigungsfeder 109 gegenüber der von dem Druck in der Kammer 112 auf den Betätigungskolben 108 ausgeübten Druckkraft. Somit verursacht die Betätigungsfeder 109 eine Bewegung des Betätigungskolbens 108 aus der in Fig. 11 dargestellten Stellung nach rechts in die in Fig. 12 dargestellte Stellung. Hierbei kommt der Betätigungskolben 108 zur Anlage an den Ventilkörper 117 oder einen geeigneten Absatz des Fortsatzes 126, wodurch der Betätigungskolben 108 das Ventilelement 107 nach rechts mitnimmt. Schließlich drückt der Betätigungskolben 108 in der in Fig. 12 dargestellten Betriebsstellung den Ventilkörper 117 mit dem Ventilelement 118 gegen den Ventilsitz 119, womit die Schließstellung des Belüftungsventils 124 und die Öffnungsstellung des Entlüftungsventils 125 automatisch herbeigeführt ist. Somit erfolgt für einen Abfall des Druckes in der Vorratsleitung 11 eine automatisierte Entlüftung des Federspeicherbremszylinders 8.

In den Ansprüchen und in der Beschreibung ist der Betätigungskolben 72 von dem Druck in der Vorratsleitung 11 beaufschlagt, also mit dem Kupplungskopfvorrat verbunden. Von der anspruchsgemäßen Formulierung soll ebenfalls umfasst sein, wenn der Betätigungskolben nicht unmittelbar mit dem Kupplungskopfvorrat und der zugeordneten Vorratsleitung verbunden ist, sondern mit einem Druck in einem Behälter beaufschlagt ist, welcher (zumindest temporär) einen Vorratsleitungsdruck "simulieren" soll. Weiterhin ist wiederholt der Druck in der Vorratsleitung 11 angesprochen bzw. ein Abfall des genannten Druckes. Es versteht sich, dass in der dem Betätigungskolben 72 zugeordneten Kammer nicht zwingend ein identischer Druck wie in der Vorratsleitung 11 bzw. am Kupplungskopfvorrat 10 anliegen muss. Vielmehr kann der Druck, welcher auf den Betätigungskolben 72 wirkt, lediglich mit dem Druck in der Vorratsleitung 11 korrelieren, beispielsweise unter Zwischenschaltung einer Drossel oder entsprechender Zuführquerschnitte oder Leitungsquerschnitte sowie Ventilquerschnitte von vorgeschalteten Ventilen.

**BEZUGSZEICHENLISTE**

| | | | |
|---|---|---|---|
| 1 | Bremsanlage | 31 | Steuerleitung |
| 2 | Löseventil | 32 | Leitung |
| 3 | Anhängerbremsventil | 33 | zweiter Eingang Wechselventil |
| 4 | Ventil | 34 | Anschluss Ventil |
| 5 | Vorratsbehälter | 35 | Anschluss Ventil |
| 6 | Regeleinrichtung | 36 | Anschluss Ventil |
| 7 | Kombi-Bremszylinder | 37 | erster Eingang Wechselventil |
| 8 | Federspeicherbremszylinder | 38 | Ausgang |
| 9 | Betriebsbremszylinder | 39 | Anschluss |
| 10 | Kupplungskopf Vorrat | 40 | Gehäuse |
| 11 | Vorratsleitung | 41 | Steuerelement |
| 12 | Kupplungskopf Bremse | 42 | Feder |
| 13 | Bremssteuerleitung | 43 | Ventilsitz |
| 14 | Wechselventil | 44 | Ventil |
| 15 | Rückschlagventil | 45 | Ausnehmung |
| 16 | Anschluss Löseventil | 46 | Kolben |
| 17 | Anschluss Löseventil | 47 | Ringkammer |
| 18 | Anschluss Löseventil | 48 | Ringkammer |
| 19 | Druckraum | 49 | Rückschlagventil |
| 20 | Steuerschieber | 50 | Kammer |
| 21 | Betätigungsorgan | 51 | Bohrung |
| 22 | Anschluss | 52 | Ventil |
| 23 | Anschluss | 53 | Bund |
| 24 | Anschluss | 54 | Ventilsitz |
| 25 | Vorratsbehälter Kupplungskopf | 55 | Ventilkörper |
| 26 | Anschluss | 56 | Rückschlagventil |
| 27 | Anschluss | 57 | Feder |
| 28 | Anschluss | 58 | Steuereinheit |
| 29 | Anschluss | 59 | Bohrung |
| 30 | Anschluss | 60 | Gehäuse |
| 61 | Ventilelement | 91 | Dichtelement |
| 62 | Entlüftungskammer | 92 | Dichtelement |
| 63 | Entlüftung | 93 | erste Kolbenfläche |
| 64 | Steuerkante | 94 | zweite Kolbenfläche |
| 65 | Steuerkante | 95 | Dichtelement |
| 66 | Ringkammer | 96 | Dichtelement |
| 67 | Betätigungsorgan | 97 | Betätigungskammer |
| 68 | Betätigungseinheit | 98 | Verbindungskanal |
| 69 | Bohrung | 99 | Stirnseite |
| 70 | Trennwand | 100 | Gegenfläche |
| 71 | Fortsatz | 101 | Dicht- und Führungseinheit |
| 72 | Betätigungskolben | 102 | Entlüftungsbohrung |
| 73 | Betätigungskammer | 103 | Kammer |
| 74 | Betätigungsfeder | 104 | Entlüftungskanal |
| 75 | Sicherungsring | 105 | Ventil |
| 76 | Ventilelement | 106 | Gehäuse |
| 77 | erster Eingang | 107 | Ventilelement |
| 78 | Wechselventil | 108 | Betätigungskolben |
| 79 | zweiter Eingang | 109 | Betätigungsfeder |
| 80 | Betriebsbremsleitung | 110 | Innenraum |
| 81 | Ausgang | 111 | Kammer |
| 82 | Schnelllöseventil | 112 | Kammer |
| 83 | Feststellbremsleitung | 113 | Kammer |
| 84 | Baueinheit | 114 | Kammer |
| 85 | Ausgang | 115 | Betätigungsorgan |
| 86 | weiteres Wechselventil | 116 | Druckstange |
| 87 | erster Eingang | 117 | Ventilkörper |
| 88 | zweiter Eingang | 118 | Ventilelement |
| 89 | Steuerleitung | 119 | Ventilsitz |
| 90 | Verriegelungseinrichtung | 120 | Verjüngung |
| 121 | Ringspalt | | |
| 122 | Bohrung | | |
| 123 | Steuerkante | | |
| 124 | Belüftungsventil | | |
| 125 | Entlüftungsventil | | |
| 126 | Fortsatz | | |
| 127 | Ausnehmung | | |

## Patentansprüche

1. Manuell betätigbares Ventil (4) für eine Bremsanlage (1) eines Anhängers eines Kraftfahrzeugs mit
a) einer Steuereinheit (58), wobei über die Steuereinheit (58) nach Stellung eines manuell betätigbaren Ventilelements (61) selektiv eine Belüftung oder Entlüftung eines Anschlusses (36) des Ventils (4) ermöglicht ist,
b) einer Betätigungseinheit (68), die einen auf einer Betätigungsfeder (74) abgestützten Betätigungskolben (72) aufweist, der vom Druck in einer Vorratsleitung (11) beaufschlagt ist, wobei bei einer Verringerung oder einem Entfall des Drucks in der Vorratsleitung (11) die Betätigungsfeder (74) das Ventilelement (61) in Richtung einer Entlüftungsstellung beaufschlagt,
**dadurch gekennzeichnet, dass**
c) der Betätigungskolben (72) und das Ventilelement (61) als
ca) separate,
cb) relativ zueinander bewegbare und
cc) unmittelbar gegeneinander abgestützte, gleitend geführte oder abgedichtete Bauelemente ausgebildet sind, zwischen denen ein nur in Richtung auf die Entlüftungsstellung wirksames Koppelelement (Sicherungsring 75) vorgesehen ist.

2. Manuell betätigbares Ventil (4) für eine Bremsanlage (1) eines Anhängers eines Kraftfahrzeugs mit
a) einer Steuereinheit (58), wobei über die Steuereinheit (58) nach Stellung eines manuell betätigbaren Ventilelements (61) selektiv eine Belüftung oder Entlüftung eines Anschlusses (36) des Ventils (4) ermöglicht ist,
b) einer Betätigungseinheit (68), die einen auf einer Betätigungsfeder (74) abgestützten Betätigungskolben (72) aufweist, der vom Druck in der Vorratsleitung (11) beaufschlagt ist, wobei bei einer Verringerung oder einem Entfall des Drucks in der Vorratsleitung (11) die Betätigungsfeder (74) das Ventilelement (61) in Richtung einer Entlüftungsstellung beaufschlagt, insbesondere nach Anspruch 1,
**dadurch gekennzeichnet, dass**
c) das Ventilelement (61) eine Belüftungsstellung und eine Entlüftungsstellung aufweist und das Ventilelement (61) für vorhandenen Druck in der Vorratsleitung (11) manuell zwischen der Belüftungsstellung und der Entlüftungsstellung bewegbar ist, ohne dass hiermit die Veränderung eine Beaufschlagung einer Feder (Betätigungsfeder 74) verbunden ist, die an einer Öffnung oder Schließung einer Druckluftverbindung des Ventils (4) beteiligt ist.

3. Ventil (4) nach Anspruch 2, **dadurch gekennzeichnet, dass** für vorhandenen Druck in der Vorratsleitung (11) eine Bewegung zwischen der Belüftungsstellung und der Entlüftungsstellung nicht mit der Beaufschlagung einer Feder gekoppelt ist.

4. Ventil (4) nach einem der vorhergehenden Ansprüche, **dadurch gekennzeichnet, dass** der Betätigungskolben (72) eine Ausnehmung (127) besitzt, durch die sich das Ventilelement (61) oder ein mit dem Ventilelement gekoppeltes Antriebselement (Fortsatz 71) erstreckt.

5. Ventil (4) nach einem der vorhergehenden Ansprüche, **dadurch gekennzeichnet, dass** das Koppelelement (Sicherungsring 75) einseitig formschlüssig wirkt.

6. Ventil (4) nach einem der vorhergehenden Ansprüche, **dadurch gekennzeichnet, dass** das Koppelelement als Absatz des Ventilelements (61) oder des mit dem Ventilelement gekoppelten Antriebselements (Fortsatz 71) ausgebildet ist.

7. Ventil (4) nach Anspruch 6, **dadurch gekennzeichnet, dass** der Absatz mit einem Sicherungsring (75) ausgebildet ist.

8. Ventil (4) nach einem der vorhergehenden Ansprüche, **dadurch gekennzeichnet, dass** der Betätigungskolben (72)
a) radial außenliegend unter Zwischenschaltung eines Dichtelements (92) gegenüber einer Bohrung (69) eines Gehäuses (60) und/oder
b) radial innenliegend unter Zwischenschaltung eines Dichtelements (91) gegenüber dem Ventilelement (61) oder einem mit dem Ventilelement (61) gekoppelten Antriebselement (Fortsatz 71)
verschieblich ist.

9. Ventil (4) nach einem der Ansprüche 1 bis 3, **dadurch gekennzeichnet, dass** das Ventilelement (61) oder ein mit dem Ventilelement (61) gekoppeltes Antriebselement (Fortsatz 71) mit einer Stirnseite (99) an dem Betätigungskolben (72) anliegt.

10. Ventil (4) nach einem der vorhergehenden Ansprüche, **dadurch gekennzeichnet, dass** der Betätigungskolben (72) als gestufter Betätigungskolben ausgebildet ist, der in einer gestuften Bohrung (69) des Gehäuses (60) aufgenommen ist.

11. Ventil (4) nach Anspruch 10, **dadurch gekennzeichnet, dass** für eine Beaufschlagung des Betätigungskolbens (72) mit dem Druck in einer Vorratsleitung (11) zunächst in einem ersten Betätigungsweg eine erste Kolbenfläche (93) des Betätigungskolbens (72) dem Druck in der Vorratsleitung (11) ausgesetzt ist und für einen anschließenden zweiten Betätigungsweg zusätzlich zu der ersten Kolbenfläche (93) eine zweite Kolbenfläche (94) des Betätigungskolbens (72) dem Druck in der Vorratsleitung (11) ausgesetzt ist.

12. Ventil (4) nach Anspruch 11, **dadurch gekennzeichnet, dass** die Beaufschlagung der zweiten Kolbenfläche (94) über einen Verbindungskanal (98) erfolgt, der bewegungsgesteuert von der Bewegung des Betätigungskolbens (72) geöffnet wird.

13. Ventil (4) nach einem der vorhergehenden Ansprüche, **dadurch gekennzeichnet, dass** das Ventil (4) als Löseventil ausgebildet ist.

14. Ventil (4) nach einem der Ansprüche 1 bis 12, **dadurch gekennzeichnet, dass** das Ventil (4) als Parkventil ausgebildet ist.

15. Ventil (4) nach Anspruch 14, **dadurch gekennzeichnet, dass** das Ventil (4) ein Wechselventil (86) aufweist, von dem
a) ein erster Eingang (87) in der Entlüftungsstellung entlüftet ist,
b) ein zweiter Eingang (88) mit einem Betriebsbremssteuerdruck beaufschlagt ist, welcher auch einer Regeleinrichtung (6) für einen Betriebsbremszylinder (9) zugeführt ist und
c) ein Ausgang (85) mit einem Federspeicherbremszylinder (8) verbunden ist.

16. Ventil (4) nach einem der vorhergehenden Ansprüche, **dadurch gekennzeichnet, dass** die Steuereinheit (58) in Schieberbauweise ausgebildet ist.

17. Ventil (4) nach einem der vorhergehenden Ansprüche, **dadurch gekennzeichnet, dass** eine Verrieglungseinheit (90) vorgesehen ist, über die der Betätigungskolben (72) verriegelbar ist.

## Claims

1. Manually operable valve (4) for a brake system (1) of a trailer of a motorised vehicle with
a) a control unit (58), where by the control unit (58) it is possible to selectively aerate or deaerate a port (36) of the valve (4) dependent on the position of a manually operable valve element (61),
b) an actuation unit (68) which comprises an actuation piston (72) being supported on an actuation spring (74), where the actuation piston (72) is biased by pressure in a supply line (11), where for a reduction or removal of the pressure in the supply line (11) the actuation spring (74) biases the valve element (61) towards a deaerating position,
**characterised in that**
c) the actuation piston (72) and the valve element (61) are formed by components
ca) being separate from each other,
cb) being movable relatively to each other and
cc) being directly supported against each other, slidingly guided or sealed,
where between the components a coupling element (securing ring 75) is provided which is only effective in the direction towards the deaerating position.

2. Manually operable valve (4) for a brake system (1) of a trailer of a motorised vehicle with
a) a control unit (58), where by the control unit (58) dependent on the position of a manually operable valve element (61) it is possible to selectively aerate or deaerate a port (36) of the valve (4),
b) an actuation unit (68) which comprises an actuation piston (72) being supported on an actuation spring (74), where the actuation piston (72) is biased by a pressure in the supply line (11), where for a reduction or removal of the pressure in the supply line (11) the actuation spring (74) biases the valve element (61) towards a deaerating position,
in particular valve according to claim 1,
**characterised in that**
c) the valve element (61) comprises an aerating and a deaerating position and for present pressure in the supply line (11) it is possible to manually move the valve element (61) between the aerating position and the deaerating position without this movement causing a change of a bias of a spring (actuation spring 74) which contributes to an opening or closure of a pressurised air connection of the valve (4).

3. Valve (4) of claim 2, **characterised in that** for present pressure in the supply line (11) a movement between the aerating position and the deaerating position is not coupled to or does not cause a bias of a spring.

4. Valve (4) of one of claims 1 to 3, **characterised in that** the actuation piston (72) comprises a recess (127) through which the valve element (61) or a drive element (protrusion 71) which is coupled to the valve element extends.

5. Valve (4) of one of claims 1 to 4, **characterised in that** the coupling element (securing ring 75) acts in one direction with a positive form lock.

6. Valve (4) of one of claims 1 to 5, **characterised in that** the coupling element is formed by a shoulder of the valve element (61) or of the drive element (protrusion 71) coupled to the valve element.

7. Valve (4) of claim 6, **characterised in that** the shoulder is formed by a securing ring (75).

8. Valve (4) of one of claims 1 to 7, **characterised in that** the actuation piston (72) is displaceable
a) with respect to a bore (69) of a housing (60) in a radial outer position under the interposition of a sealing element (92) and/or
b) with respect to the valve element (61) or a drive element (protrusion 71) coupled to the valve element (61) in a radial inner position under interposition of a sealing element (91).

9. Valve (4) of one of claims 1 to 3, **characterised in that** the valve element (61) or a drive element (protrusion 71) coupled to the valve element (61) contacts the actuation piston (72) with one front surface (99).

10. Valve (4) of one of claims 1 to 9, **characterised in that** the actuation piston (72) is formed by a stepped actuation piston which is accommodated in a stepped bore (69) of the housing (60).

11. Valve (4) of claim 10, **characterised in that** for a bias of the actuation piston (72) with the pressure in a supply line (11) at first in a first actuation path a first piston surface (93) of the actuation piston (72) is biased with the pressure in the supply line (11) and for a subsequent second actuation path additionally to the first piston surface (93) a second piston surface (94) of the actuation piston (72) is biased by the pressure in the supply line (11).

12. Valve (4) of claim 11, **characterised in that** the bias of the second piston surface (94) is provided via a connecting channel (98) which is opened by motion control by the movement of the actuation piston (72).

13. Valve (4) of one of claims 1 to 12, **characterised in that** the valve (4) forms a shunting valve.

14. Valve (4) of one of claims 1 to 12, **characterised in that** the valve (4) forms a parking valve.

15. Valve (4) of claim 14, **characterised in that** the valve (4) comprises a shuttle valve (86), where
a) a first inlet (87) of the shuttle valve (86) is deaerated in a deaerating position,
b) a second inlet (88) of the shuttle valve (86) is biased by a service brake control pressure which is also supplied to a control device (6) for a service brake cylinder (9) and
c) an outlet (85) of the shuttle valve (86) is connected to a spring brake cylinder (8).

16. Valve (4) of one of claims 1 to 15, **characterised in that** the control unit (58) is formed in a slider design.

17. Valve (4) of one of claims 1 to 16, **characterised in that** a locking unit (90) is provided by which it is possible to lock the actuation piston (72).

## Revendications

1. Soupape pouvant être entraînée manuellement (4) pour une installation de frein (1) d'une remorque d'un véhicule automobile ayant
a) une unité de commande (58), une mise à l'air ou une purge de l'air d'un raccordement (36) de la soupape (4) pouvant être réalisée de façon sélective au moyen de l'unité de commande (58) selon la position d'un élément de soupape pouvant être entraîné manuellement (61);
b) une unité d'actionnement (68) qui présente un piston d'actionnement (72), prenant appui sur un ressort d'actionnement (74), sur lequel agit une pression dans une conduite d'alimentation (11), le ressort d'actionnement (74) agissant sur l'élément de soupape (61) dans la direction d'une position de purge de l'air dans le cas d'une diminution ou d'une perte de la pression dans la conduite d'alimentation (11),
**caractérisée en ce que**
c) le piston d'actionnement (72) et l'élément de soupape (61) sont réalisés en tant que composants
ca) séparés,
cb) mobiles l'un par rapport à l'autre et
cc) prenant appui, guidés en glissement ou scellés directement l'un contre l'autre,
entre lesquels il est prévu un élément de couplage (bague de sûreté 75) actif uniquement dans la direction de la position de purge de l'air.

2. Soupape pouvant être entraînée manuellement (4) pour une installation de frein (1) d'une remorque d'un véhicule automobile ayant
a) une unité de commande (58), une mise à l'air ou une purge de l'air d'un raccordement (36) de la soupape (4) pouvant être réalisée de façon sélective au moyen de l'unité de commande (58) selon la position d'un élément de soupape pouvant être entraîné manuellement (61);
b) une unité d'actionnement (68) qui présente un piston d'actionnement (72), prenant appui sur un ressort d'actionnement (74), sur lequel agit une pression dans la conduite d'alimentation (11), le ressort d'actionnement (74) agissant sur l'élément de soupape (61) dans la direction d'une position de purge de l'air dans le cas d'une diminution ou d'une perte de la pression dans la conduite d'alimentation (11),
en particulier selon la revendication 1,
**caractérisée en ce que**
c) l'élément de soupape (61) présente une position de mise à l'air et une position de purge de l'air et l'élément de soupape (61) peut être déplacé manuellement entre la position de mise à l'air et la position de purge de l'air pour une pression présente dans la conduite d'alimentation (11) sans que ce changement soit lié à un effet sur un ressort (ressort d'actionnement 74) qui participe à une ouverture ou une fermeture d'un raccordement d'air comprimé de la soupape (4).

3. Soupape (4) selon la revendication 2, **caractérisée en ce que** pour une pression présente dans la conduite d'alimentation (11), un déplacement entre la position de mise à l'air et la position de purge de l'air n'est pas couplé à un effet sur un ressort.

4. Soupape (4) selon l'une des revendications précédentes, **caractérisée en ce que** le piston d'actionnement (72) possède un évidement (127) à travers lequel s'étend l'élément de soupape (61) ou un élément d'entraînement couplé à l'élément de soupape (prolongement 71).

5. Soupape (4) selon l'une des revendications précédentes, **caractérisée en ce que** l'élément de couplage (bague de sûreté 75) agit sur un côté par liaison mécanique.

6. Soupape (4) selon l'une des revendications précédentes, **caractérisée en ce que** l'élément de couplage est réalisé en tant que talon de l'élément de soupape (61) ou de l'élément d'entraînement couplé à l'élément de soupape (prolongement 71).

7. Soupape (4) selon la revendication 6, **caractérisée en ce que** le talon est réalisé avec une bague de sûreté (75).

8. Soupape (4) selon l'une des revendications précédentes, **caractérisée en ce que** le piston d'actionnement (72) peut coulisser
a) dans une position radialement à l'extérieur, avec l'interposition d'un élément d'étanchéité (92), par rapport à un alésage (69) d'un logement (60) et/ou
b) dans une position radialement à l'intérieur, avec l'interposition d'un élément d'étanchéité (91), par rapport à l'élément de soupape (61) ou à un élément d'entraînement couplé à l'élément de soupape (61) (prolongement 71).

9. Soupape (4) selon l'une des revendications 1 à 3, **caractérisée en ce que** l'élément de soupape (61) ou un élément d'entraînement couplé à l'élément de soupape (61) (prolongement 71) repose avec un côté frontal (99) sur le piston d'actionnement (72).

10. Soupape (4) selon l'une des revendications précédentes, **caractérisée en ce que** le piston d'actionnement (72) est réalisé en tant que piston d'actionnement à gradin qui est reçu dans un alésage à gradin (69) du logement (60).

11. Soupape (4) selon la revendication 10, **caractérisée en ce que** pour produire un effet sur le piston d'actionnement (72) avec la pression présente dans une conduite d'alimentation (11), d'abord, une première surface de piston (93) du piston d'actionnement (72) est exposée à la pression présente dans la conduite d'alimentation (11) dans une première course d'actionnement, et en complément à la première surface de piston (93), une deuxième surface de piston (94) du piston d'actionnement (72) est exposée à la pression présente dans la conduite d'alimentation (11) pour une deuxième course d'actionnement consécutive.

12. Soupape (4) selon la revendication 11, **caractérisée en ce que** l'effet est produit sur la deuxième surface de piston (94) par le biais d'une conduite de liaison (98) qui est ouverte, de façon commandée par le mouvement, par le déplacement du piston d'actionnement (72).

13. Soupape (4) selon l'une des revendications précédentes, **caractérisée en ce que** la soupape (4) est réalisée en tant que soupape de desserrage.

14. Soupape (4) selon l'une des revendications 1 à 12, **caractérisée en ce que** la soupape (4) est réalisée en tant que soupape de stationnement.

15. Soupape (4) selon la revendication 14, **caractérisée en ce que** la soupape (4) présente une soupape à deux voies (86), dont
a) une première entrée (87) est purgée dans la position de purge de l'air,
b) une deuxième entrée (88) est soumise à l'effet d'une pression de commande de frein de service, qui est également amenée à un dispositif de régulation (6) pour un cylindre de frein de service (9), et
c) une sortie (85) est reliée à un cylindre de frein à ressort accumulateur (8).

16. Soupape (4) selon l'une des revendications précédentes, **caractérisée en ce que** l'unité de commande (58) est réalisée dans une forme de construction de curseur.

17. Soupape (4) selon l'une des revendications précédentes, **caractérisée en ce qu'**il est prévu une unité de verrouillage (90) au moyen de laquelle le piston d'actionnement (72) peut être verrouillé.
